# EUROPÄISCHE PATENTSCHRIFT

(11) **EP 3 062 909 B1**
(45) Veröffentlichungstag und Bekanntmachung des Hinweises auf die Patenterteilung: **15.02.2017**
(21) Anmeldenummer: 16700773.1
(22) Anmeldetag: 18.01.2016
(51) Int. Cl.: B01D 46/24, B01D 46/10, B01D 46/00

(54) **FILTERWECHSELVORRICHTUNG UND VERFAHREN ZU DEREN BETRIEB**
FILTER CHANGING DEVICE AND METHOD FOR THE OPERATION THEREOF
DISPOSITIF DE REMPLACEMENT DE FILTRE ET PROCÉDÉ DE FONCTIONNEMENT

(30) Priorität: 12.10.2015 DE 202015105378 U; 22.01.2015 DE 102015201064
(43) Veröffentlichungstag der Anmeldung: 07.09.2016
(73) Patentinhaber: Neumann, Jens, 48455 Bad Bentheim (DE)
(72) Erfinder: Neumann, Jens, 48455 Bad Bentheim (DE)
(74) Vertreter: Werner & ten Brink
(86) Internationale Anmeldenummer: PCT/EP2016/050874
(87) Internationale Veröffentlichungsnummer: WO 2016/116393

(56) Entgegenhaltungen:
- EP-A1- 1 250 966
- EP-A1- 1 342 506
- WO-A1-03/086582
- US-A- 4 226 715

## Beschreibung

Die Erfindung betrifft eine Vorrichtung, die einerseits als Filtervorrichtung und andererseits als Filterwechselvorrichtung fungiert. Insofern wird die gegenständliche Vorrichtung als Filter- und Filterwechselvorrichtung bezeichnet. Eine solche Bezeichnung ist allerdings eine verkürzte Bezeichnung, denn die Vorrichtung fungiert dann als Filter- und Filterwechselvorrichtung, wenn diese zumindest ein Filterelement aufnimmt. Die Verwendung eines Filterelements ist aber nicht für alle möglichen Anwendungssituationen sinnvoll und entsprechend kann die Vorrichtung anstelle eines oder mehrerer Filterelemente auch ein Abscheideelement oder eine Mehrzahl von Abscheideelementen aufnehmen. Dann handelt es sich bei der Vorrichtung um eine Abscheide- und Abscheideelementwechselvorrichtung. Zur Vermeidung eines Ausdrucks wie Filter- und Filterwechselvorrichtung oder Abscheide- und Abscheideelementwechselvorrichtung wird die gegenständliche Vorrichtung im Interesse einer besseren Lesbarkeit der nachfolgenden Beschreibung im Folgenden mitunter nur als Filter- und Filterwechselvorrichtung oder kurz als Filterwechselvorrichtung bezeichnet. Die Funktion der Vorrichtung als Filter- oder Abscheidevorrichtung und die Verwendbarkeit auch als Abscheideelementwechselvorrichtung sind dabei stets mitzulesen.

Eine Filter- und Filterwechselvorrichtung ist aus der EP 2 532 409 A1 bekannt. Dort wird ein Filtermodul beschrieben, das mit anderen Filtermodulen zu einer Modulwand kombinierbar ist, entweder indem die einzelnen Module matrixartig nebeneinander und aufeinander gestellt werden oder indem die Module in einer matrixartigen Anordnung in einem dafür vorgesehenen Rahmen platziert werden.

Die Lösung gemäß der EP 2 532 409 A1 bietet viele Vorteile, nicht zuletzt wegen der hohen sogenannten Standzeit der einzelnen Filter- oder Abscheidemodule. Das Auswechseln von Modulen, deren Aufnahmekapazität erschöpft ist, ist vergleichsweise einfach, indem bei in einem Rahmen platzierten Modulen die jeweiligen Module dort entnommen und durch ein neues Modul ersetzt werden. Je nach den am Ort einer solchen Modulwand gegebenen Platzverhältnissen kann das Auswechseln einzelner Module auch auf einer Rückseite der Modulwand erfolgen. Die Vorder- oder Frontseite der Modulwand ist die Seite, welche einem Bereich, in dem Staub oder Schmutz oder sonstige Schwebstoffe, wie zum Beispiel Farbpartikel (Farbnebel) oder dergleichen auftreten, zugewandt ist. Die Rückseite ist entsprechend die davon abgewandte Seite.

Die Lösung gemäß der EP 2 532 409 A1 ist allerdings insofern noch verbesserungsfähig, als zum Beispiel bei einer Verwendung einer solchen Modulwand in einer Lackieranlage der Lackierbetrieb unterbrochen werden muss, wenn ein Austausch einzelner oder mehrerer Module notwendig ist.

Zum Problem des Filter- oder Modulwechsels finden sich im Stand der Technik unterschiedliche Ansätze.

Zur Reinhaltung von Raumluft sind in Strömungskanälen platzierte Lüftungsfilter vorgesehen. Auch diese müssen nach Erreichen ihrer vollständigen Beladung mit den abzuscheidenden unerwünschten Unreinheiten ausgetauscht werden. Dafür ist es erforderlich, den Strömungsbereich zu öffnen, um die Filter zu entnehmen und aufzubereiten oder auszutauschen. Dafür ist die Verwendung verschließbarer Revisionsöffnungen üblich, welche einen Zugriff auf die Filter erlauben. In Abhängigkeit von der Bauform und dem jeweils verwendeten Filtermaterial muss die Revisionsöffnung derart ausgestaltet werden, dass die Filter ungehindert entnommen und installiert werden können. Um einen unbehandelten Austritt der ungefilterten Luft aus dem Kanal zu verhindern, muss die Luftförderung unterbrochen werden. Bei ununterbrochener Luftförderung tritt bei Öffnung einer Revisionsöffnung ungefilterte Luft aus dem Strömungskanal aus und breitet sich unkontrolliert außerhalb des Strömungskanals aus. In Anlagen, die aufgrund ihrer Anwendung möglichst ohne Unterbrechung betrieben werden sollen und bei denen eine unkontrollierte Ausbreitung der ungefilterten Luft ausgeschlossen werden muss, ist somit die Nutzung des Lüftungssystems an den Wechselintervallen der Filter auszurichten.

Zum Verlängern von Intervallen zum Austausch von Filtern werden sowohl in der Gasfiltration wie auch in der Flüssigkeitsfiltration mitunter sogenannte Rollbandfilter verwendet. Dabei wird ein auf eine Rolle gewickeltes Filtermedium als plane Filterebene mittels entsprechender Auf- und Abrollvorrichtungen im Innern eines Strömungskanals quer zu dessen Längserstreckung geführt. Nachteilig bei dieser Lösung ist die auf den Kanalquerschnitt begrenzte Filterfläche. Dies bewirkt, dass der plane Filter im Vergleich zu anderen Bauformen, wie zum Beispiel Filter in Form eines Beutelfilters oder in Form plissierter Filterkörper, erheblich weniger Filterfläche im Förderstrom bietet. Die jeweils wirksame Filterfläche muss demnach abhängig von der Belastungsgrenze des jeweiligen Filtermediums gewählt werden, was je nach Anwendungssituation zu einer Vergrößerung des Bauraums des Strömungskanals und/oder zu einem kontinuierlichen Auf- und Abrollen des Filtermediums führt. Eine solche Lösung ist vergleichsweise aufwändig und erfordert für den Antrieb der Auf- und Abrollvorrichtungen sowie für die Aufnahme der dort befindlichen oder entstehenden Wicklungen viel Platz. Darüber hinaus ist die Abdichtung im Bereich der jeweils wirksamen Filterfläche zum umgebenden Strömungskanal problematisch.

Aus der DE 41 05 867 A1 ist eine Filtereinrichtung für flüssigen Kunststoff führende Druckleitungen bekannt. Dabei werden die Filterelemente rotatorisch segmentweise in die Druckleitung gefahren. Die Wirkfläche der Filterelemente entspricht der auf die Größe der angeschlossenen Druckleitung begrenzten Stirnfläche des jeweiligen Filterelements. Daraus resultiert, dass die Filter entsprechend häufig im Förderstrom verfahren werden müssen.

Aus der EP 1 250 966 A1 ist eine Vorrichtung bekannt, bei welcher Abluft einer Lackierstation durch ein bandförmiges Filterelement, welches sich zwischen zwei Trommeln bewegt, gefiltert wird.

Eine Aufgabe der hier vorgestellten Neuerung besteht darin, eine weitere Ausführungsform einer Vorrichtung zur Aufnahme von Filter- und/oder Abscheidemodulen, -elementen oder -segmenten anzugeben, insbesondere eine derartige Vorrichtung, die einen Austausch einzelner Filter- oder Abscheideelemente oder ähnlicher derartiger Einheiten auch ohne Unterbrechung des jeweiligen Prozesses erlaubt, welcher die Filterung oder Abscheidung erfordert, also zum Beispiel ohne Unterbrechung eines Lackierprozesses.

Diese Aufgabe wird erfindungsgemäß mittels einer Vorrichtung der eingangs genannten Art mit den Merkmalen des Anspruchs 1 gelöst. Bei einer solchen Vorrichtung, welche bestimmungsgemäß das Wechseln eines von der Vorrichtung aufgenommenen Filter- und/oder Abscheideelements oder -moduls erlaubt, ist vorgesehen, dass die Vorrichtung einen Bestandteil einer Wandung zwischen einem ersten, inneren Bereich und einem zweiten, äußeren Bereich bildet, dass die Vorrichtung eine zylindrische oder im Wesentlichen zylindrische Hüllkontur, zumindest eine rotationssymmetrische Hüllkontur, aufweist sowie um eine Drehachse, insbesondere um die Hochachse der Vorrichtung, drehbar ist und dass mittels einer Drehung der Vorrichtung oder der umgebenden Wandung um die Drehachse ein mit seiner Außenfläche dem äußeren Bereich zugewandtes Filter- und/oder Abscheideelement in den inneren Bereich verschwenkbar ist und umgekehrt. Bei einer solchen Drehung der Vorrichtung resultiert gewissermaßen eine Öffnung der Vorrichtung zu einem der beiden Bereiche. Im Bereich dieser Öffnung besteht die Möglichkeit, ein einzelnes Filter- und/oder Abscheideelement oder -modul oder -segment - im Folgenden zusammenfassend als Filter- und/oder Abscheideeinheit oder kurz nur als Einheit bezeichnet-, zu entnehmen.

Bei dem allgemein als innerer Bereich bezeichneten Raumabschnitt handelt sich zum Beispiel um das Innere einer Lackierkabine. Allgemein kann der innere Bereich als kontaminierter Bereich bezeichnet werden, denn in diesem Bereich entstehen zum Beispiel Farbnebel mit mittels der Vorrichtung aufzufangenden (abzuscheidenden) Farbpartikeln. Der äußere Bereich wird vom inneren, kontaminierten Bereich zumindest einseitig mittels einer Wandung und der der Wandung zugeordneten Vorrichtung abgeteilt. Der äußere Bereich kann entsprechend im Gegensatz zu dem inneren, kontaminierten Bereich auch als Reinraum bezeichnet werden, wobei damit nicht eine strenge Definition, wie sie zum Beispiel für Reinräume zur Verwendung bei der Halbleiterproduktion oder in der Lebensmitteltechnik gilt, impliziert werden soll, sondern lediglich zum Ausdruck gebracht werden soll, dass in diesen Bereich die jeweiligen unerwünschten Unreinheiten nicht oder zumindest normalerweise nicht vordringen.

Die Vorrichtung weist eine rotationssymmetrische zylindrische oder im Wesentlichen zylindrische Hüllkontur auf und ist um die Symmetrieachse, zum Beispiel um die Hochachse der Vorrichtung, drehbar und wird im Betrieb gedreht, um bei Bedarf einzelne oder mehrere Filter- und/oder Abscheideeinheiten auszutauschen. Mittels einer Drehung der Vorrichtung oder alternativ mittels einer Drehung der umgebenden Wandung um die Drehachse ist eine mit seiner Außenfläche dem äußeren Bereich zugewandte Filter- und/oder Abscheideeinheit in den inneren Bereich drehbar und umgekehrt. Eine in den äußeren Bereich gedrehte derartige Einheit kann dort entnommen und durch eine neue oder aufbereitete ("frische") Einheit ersetzt werden. Dann kann die frische Filter- und/oder Abscheideeinheit wieder vom äußeren Bereich in den inneren Bereich gedreht werden.

Eine Luftströmung durch die Vorrichtung hindurch sowie durch zumindest einzelne davon umfasste Filter- und/oder Abscheideeinheiten hindurch trifft quer oder im Wesentlichen quer zur Längsachse der Vorrichtung auf die Außenoberfläche der oder jeder zwischen den angrenzenden Wandungen dem inneren Bereich zugewandten Einheit und wird bei einer besonderen Ausführungsform der Vorrichtung in deren Innerem umgelenkt und entlang der Längsachse der Vorrichtung aus dieser ausgeleitet. Zum Erzeugen einer solchen Luftströmung ist die Vorrichtung zum Beispiel stromabwärts an einen Lüftungskanal und eine dem Lüftungskanal zugeordnete Fördereinrichtung, zum Beispiel ein Gebläse, angeschlossen. Mittels des Gebläses wird ein im inneren Bereich befindliches Aerosol, zum Beispiel Farbnebel, durch die Vorrichtung hindurch angesaugt. Alternativ ergibt sich die Luftströmung durch die Vorrichtung hindurch - bei gleichem Luftweg innerhalb der Vorrichtung - aufgrund eines im inneren Bereich herrschenden Überdrucks, nämliche eines Überdrucks relativ zum stromabwärts gelegenen Ausgang der Vorrichtung. Aufgrund des Überdrucks wird das im inneren Bereich befindliche Aerosol durch die Vorrichtung gedrückt.

Nach einer gewissen Betriebszeit resultiert eine vollständige oder zumindest weitgehend vollständige Beladung der oder jeder zwischen den angrenzenden Wandungen dem inneren Bereich zugewandten Filter- und/oder Abscheideeinheit der Vorrichtung mit den jeweils vom Aerosol transportierten Partikeln und diese muss bzw. müssen ausgetauscht oder aufgearbeitet werden. Dafür wird die Vorrichtung um die Drehachse gedreht, bis die jeweilige Einheit oder die jeweiligen Einheiten zwischen den an die Vorrichtung angrenzenden Wandungen vom äußeren Bereich aus zugänglich ist bzw. sind.

Zum Entnehmen einzelner oder mehrerer Filter- und/oder Abscheideeinheiten aus der Vorrichtung und zum Platzieren einzelner oder mehrerer frischer Einheiten in der Vorrichtung braucht aufgrund der Drehbarkeit der Vorrichtung der innere, kontaminierte Bereich nicht betreten zu werden und der Prozess, welcher die Filterung oder Abscheidung erfordert, also zum Beispiel ein Lackierprozess, braucht nicht unterbrochen werden.

Im Interesse einer besseren Lesbarkeit wird im Folgenden eine zwischen den an die Vorrichtung angrenzenden Wandungen dem inneren Bereich zugewandte Filter- und/oder Abscheideeinheit der Vorrichtung als innere Einheit bezeichnet. Entsprechend wird eine zwischen den an die Vorrichtung angrenzenden Wandungen dem äußeren Bereich zugewandte Filter- und/oder Abscheideeinheit der Vorrichtung als äußere Einheit bezeichnet.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist. Schließlich ist darauf hinzuweisen, dass das hier angegebene Verfahren auch entsprechend der abhängigen Vorrichtungsansprüche und/oder der hier und im Folgenden beschriebenen Vorrichtungsmerkmale weitergebildet sein kann und umgekehrt. Eine Formulierung wie "ein Luftstrom durch die Vorrichtung" oder "ein Luftstrom durch das Element" ist wie "ein Luftstrom durch die Vorrichtung hindurch" bzw. "ein Luftstrom durch das Element hindurch" zu lesen, also so zu verstehen, dass der Luftstrom durch die Vorrichtung bzw. das Element hindurchtritt, also einerseits in die Vorrichtung bzw. in das Element eintritt und andererseits aus der Vorrichtung bzw. aus dem Element ganz oder zumindest teilweise wieder austritt.

Die mit der Anmeldung eingereichten Ansprüche sind Formulierungsvorschläge ohne Präjudiz für die Erzielung weitergehenden Schutzes. Da speziell die Gegenstände der Unteransprüche im Hinblick auf den Stand der Technik am Prioritätstag eigene und unabhängige Erfindungen bilden können, behält der Anmelder sich vor, diese oder noch weitere, bisher nur in der Beschreibung und/oder Zeichnung offenbarte Merkmalskombinationen zum Gegenstand unabhängiger Ansprüche oder Teilungserklärungen zu machen. Sie können weiterhin auch selbständige Erfindungen enthalten, die eine von den Gegenständen der vorhergehenden Unteransprüche unabhängige Gestaltung aufweisen.

Bei einer Ausführungsform der bestimmungsgemäß zum Wechseln einer oder mehrerer von der Vorrichtung aufgenommener Filter- und/oder Abscheideeinheiten vorgesehenen Vorrichtung weist diese einen Rahmen zur Aufnahme zumindest einer Filter- und/oder Abscheideeinheit auf, wobei der Rahmen und die oder jede darin oder daran platzierte Filter- und/oder Abscheideeinheit mittels einer teilweisen Drehung der Vorrichtung aus dem inneren Bereich in den äußeren Bereich drehbar ist und umgekehrt. Ein solcher Rahmen erlaubt eine genaue Platzierung einer Filter- und/oder Abscheideeinheit in oder an der Vorrichtung. Bei der allgemeineren Ausführungsform ohne einen solchen Rahmen besteht die Möglichkeit, Filter- und/oder Abscheideeinheiten mit einer Raumform, zum Beispiel quaderförmige oder hohlzylindersegmentförmige Einheiten, nebeneinander zu platzieren und ggf. in mehreren Ebenen übereinander zu stapeln, so dass sich mit einer Mehrzahl solcher Einheiten ein Hohlzylinder ergibt. Jeweils nur der Oberflächenabschnitt eines solchen Hohlzylinders, der zwischen den an die Vorrichtung angrenzenden Wandungen dem inneren Bereich zugewandt ist, insbesondere dort befindliche innere Einheiten, sind zur Filterung und/oder Abscheidung wirksam. Im Bereich eines Oberflächenabschnitts, der zwischen den an die Vorrichtung angrenzenden Wandungen dem äußeren Bereich zugewandt ist, können Filter- und/oder Abscheideeinheiten - äußere Einheiten - entnommen und durch frische Einheiten ersetzt werden. Bei einer Vorrichtung ohne einen zur Aufnahme solcher Einheiten bestimmten Rahmen müssen bei in mehreren Ebenen angeordneten Einheiten zunächst die in der obersten Ebene befindlichen Einheiten entnommen werden, um sukzessive auch die in einer unteren Ebene befindlichen Einheiten erreichen zu können. Bei der hier erläuterten Ausführungsform der Vorrichtung mit einem Rahmen zur Aufnahme solcher Einheiten kann jede Einheit einzeln entnommen und durch eine frische Einheit ersetzt werden. Ganz allgemein erleichtert ein solcher Rahmen die positionsrichtige Platzierung einzelner Filter- und/oder Abscheideeinheiten, erhöht die Stabilität der Vorrichtung und hilft, Undichtigkeiten im Grenzbereich zwischen zwei aneinander angrenzenden Filter- und/oder Abscheideeinheiten zu vermeiden.

Eine weitere Ausführungsform der hier vorgeschlagenen Vorrichtung zeichnet sich dadurch aus, dass eine Strömungsrichtung durch eine Filter- und/oder Abscheideeinheit, insbesondere eine Richtung einer Luftströmung durch eine solche Einheit, in etwa orthogonal zu einem Strömungskanal im Innern der Vorrichtung verläuft, wobei der Strömungskanal parallel oder zumindest im Wesentlichen parallel zu einer Längsachse der Vorrichtung verläuft. Dies hat den Vorteil, dass ein durch die Vorrichtung gesaugtes oder gedrücktes Medium, insbesondere ein Aerosol, unabhängig von einer jeweiligen Orientierung der Vorrichtung stets durch den Strömungskanal aus der Vorrichtung austreten kann.

Eine weitere Ausführungsform der hier vorgeschlagenen Vorrichtung zeichnet sich durch eine Filter- und/oder Abscheideeinheit aus, welche aus zwei oder mehr getrennt, also unabhängig voneinander austauschbaren Segmenten gebildet ist, zum Beispiel indem die Vorrichtung einen Rahmen der oben genannten Art aufweist, in oder an dem solche einzelnen Segmente platzierbar sind. Dann kann der Austausch vollständig oder zumindest weitgehend vollständig beladener Segmente einer Filter- und/oder Abscheideeinheit ausschließlich in Abhängigkeit von deren Beladung (Füllgrad) und zum Beispiel unabhängig von einer Position des jeweiligen Segments innerhalb der Vorrichtung erfolgen.

Zum besseren Verständnis soll im Zusammenhang mit den oben erwähnten austauschbaren Segmenten die Bedeutung des Begriffs Segment und der Zusammenhang mit einem Filter- und/oder Abscheideelement (Element) oder einer Filter- und/oder Abscheideeinheit (Einheit) erläutert werden. Das Filter- und/oder Abscheideelement ist bei der Definition der Vorrichtung im unabhängigen Anspruch nicht weiter spezifiziert. Dies ist auch beabsichtigt, denn ein Filter- und/oder Abscheideelement kann zum Beispiel eine an der Vorrichtung angebrachte Filtermatte sein, wobei mittels der Anbringung einer solchen Filtermatte diese einen Teil der Außenoberfläche der Vorrichtung bildet und folglich als Filter- und/oder Abscheideelement wirksam werden kann. Eine solche Filtermatte kann - bezogen auf die Längsachse der Vorrichtung - in vertikaler oder horizontaler Richtung in einzelne Segmente unterteilt sein. Ein Filter- und/oder Abscheideelement kann aber genauso quaderförmig ausgeführt sein oder eine sonstige Raumform, zum Beispiel die Form eines Hohlzylindersegments, aufweisen. Dann wird es als Filter- und/oder Abscheidemodul (Modul) bezeichnet. Ein solches Modul kann einzeln oder in Kombination mit anderen gleichartigen Modulen wiederum als Filter- und/oder Abscheideelement oder Filter- und/oder Abscheidesegment aufgefasst werden. Als Oberbegriff für alle erwähnten Bezeichnungen wird hier und im Folgenden die Bezeichnung Filter- und/oder Abscheideeinheit verwendet.

Eine weitere Ausführungsform der hier vorgeschlagenen Vorrichtung zeichnet sich dadurch aus, dass entlang einer Umfangslinie der Vorrichtung eine Mehrzahl von Filter- und/oder Abscheideeinheiten, ggf. eine Mehrzahl von Filter- und/oder Abscheideeinheiten mit jeweils mehreren unabhängig voneinander austauschbaren Segmenten, nebeneinander platziert oder platzierbar ist, vorzugsweise derart, dass entlang der Umfangslinie eine kontinuierliche Aneinanderreihung der jeweiligen Einheiten resultiert. Dann ist gewährleistet, dass sich auch bei einer Drehung der Vorrichtung zum Entnehmen jeweils mindestens einer Einheit auf der Seite des äußeren Bereichs zumindest eine Einheit auf der Seite des inneren Bereichs befindet, so dass der Prozess, welcher die Filterung oder Abscheidung erfordert, also zum Beispiel ein Lackierprozess, nicht unterbrochen werden muss und fortwährend eine Filterung des jeweiligen Aerosols oder ein Abscheiden von mit dem Aerosol mitgeführten Partikeln erfolgt.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das oder jedes Ausführungsbeispiel ist nicht als Einschränkung der Erfindung zu verstehen. Vielmehr sind im Rahmen der vorliegenden Offenbarung zahlreiche Abänderungen und Modifikationen möglich, insbesondere solche Varianten und Kombinationen, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen
- Fig. 1: eine Ausführungsform einer Vorrichtung zum Wechseln eines von der Vorrichtung aufgenommenen Filter- und/oder Abscheideelements,
- Fig. 2: eine Vorrichtung gemäß Fig. 1 mit einem weiterführenden Kanalsystem,
- Fig. 3: eine Draufsicht auf eine weitere Ausführungsform einer Vorrichtung zum Wechseln eines von der Vorrichtung aufgenommenen Filter- und/oder Abscheideelements,
- Fig. 4, Fig. 5 und Fig. 6: Teile einer Vorrichtung gemäß Fig. 3,
- Fig. 7 und Fig. 8: perspektivische Ansichten nochmals weiterer Ausführungsformen einer Vorrichtung zum Wechseln eines von der Vorrichtung aufgenommenen Filter- und/oder Abscheideelements,
- Fig. 9: eine perspektivische Ansicht einer Vorrichtung gemäß Fig. 8 zur Erläuterung einer speziellen Funktion der Vorrichtung,
- Fig. 10: eine perspektivische Ansicht einer Vorrichtung gemäß Fig. 7,8 oder 9 zur Erläuterung einer weiteren speziellen Funktion der Vorrichtung und
- Fig. 11: einen Schnitt durch eine Vorrichtung zum Beispiel gemäß Fig. 8.

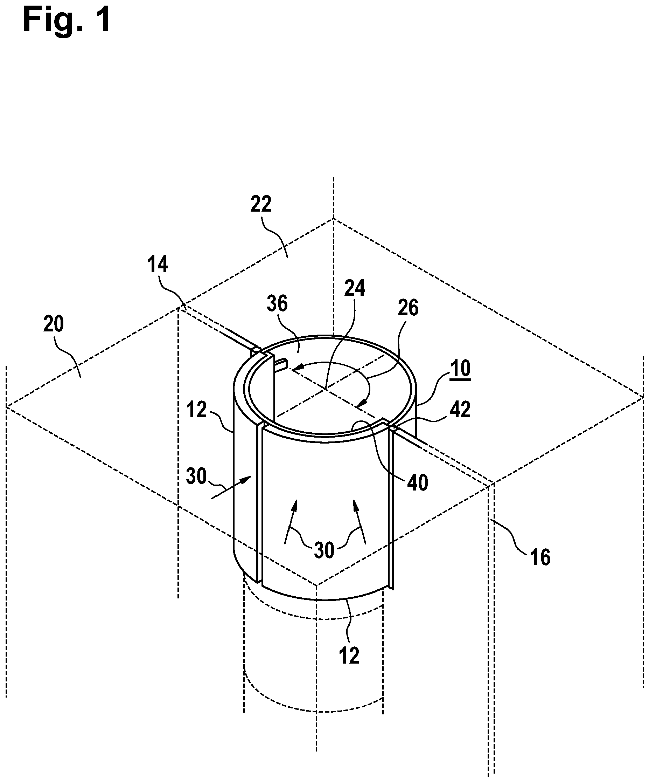

Die Darstellung in Figur 1 zeigt in schematisch vereinfachter Art und Weise eine Ausführungsform einer im Folgenden mitunter kurz als Filterwechselvorrichtung 10 bezeichneten Vorrichtung 10 zum Wechseln eines von der Vorrichtung 10 aufgenommenen Filter- und/oder Abscheideelements 12. Die Kurzbezeichnung der Vorrichtung 10 als Filterwechselvorrichtung 10 stellt keinerlei Verzicht auf eine Abscheidefunktion mittels von der Filterwechselvorrichtung 10 aufgenommener Abscheideelemente 12 dar und soll nur der besseren Lesbarkeit der nachfolgenden Beschreibung dienen.

Die Filterwechselvorrichtung 10 weist erkennbar eine zylindrische Hüllkontur auf, beim gezeigten Ausführungsbeispiel indem die Filterwechselvorrichtung 10 zylindrisch ausgeführt ist. Die Filterwechselvorrichtung 10 befindet sich zwischen zwei Abschnitten einer Wandung 14, 16. Die Wandungen 14, 16 teilen zusammen mit der Filterwechselvorrichtung 10 einen die Filterwechselvorrichtung 10 umgebenden Raum in einen ersten und einen zweiten Bereich, wobei zur Unterscheidung der erste Bereich als innerer Bereich 20 und der zweite Bereich als äußerer Bereich 22 bezeichnet wird.

Die Filterwechselvorrichtung 10 kommt zur Verwendung bei der Abscheidung von in einem Aerosol mitgeführten Farbpartikeln (Farbnebel) in Betracht. Bei einer solchen Anwendungssituation gehört der innere Bereich 20 zu einer Lackierkabine oder dergleichen und aufgrund der dort beim Betrieb einer Lackiereinrichtung, zum Beispiel eines oder mehrerer Lackierroboter, entstehenden Farbnebel kann der innere Bereich 20 auch als kontaminierter Bereich aufgefasst werden. Die beiden Abschnitte der Wandung 14, 16 fungierend dann als eine Seitenwand der Lackierkabine. Diese grenzen zusammen mit der Filterwechselvorrichtung 10 das Innere der Lackierkabine vom äußeren Bereich 22 ab, in den aufgrund der hier vorgeschlagenen Filterwechselvorrichtung 10 beim Lackierbetrieb keine Farbpartikel oder dergleichen vordringen.

Dafür weist die Filterwechselvorrichtung 10 bei der in Figur 1 gezeigten Ausführungsform zwei im Folgenden mitunter kurz, aber ohne Verzicht auf eine weitergehende Allgemeingültigkeit, als Filterelemente 12 bezeichnete Filter- und/oder Abscheideelemente 12 auf. Bei jeder Erwähnung des Begriffs Filterelement 12 ist die allgemeinere Formulierung Filter- und/oder Abscheideelement 12 stets mitzulesen. Die in Figur 1 gezeigten zwei Filterelemente 12 sind ausdrücklich nur beispielhaft zu verstehen und auf die konkrete Anzahl der Filterelemente 12, die im Wesentlichen nur von der jeweils wirksamen Oberfläche abhängig ist, kommt es nicht an.

Bei der in Figur 1 gezeigten Ausführungsform ist die Filterwechselvorrichtung 10 bezüglich der Wandungen 14, 16 so positioniert, dass deren Längsachse (Hochachse) in einer gemeinsame Ebene der Wandungen 14, 16 liegt. Genau eine Hälfte der Mantelfläche der Filterwechselvorrichtung 10 ist damit dem inneren Bereich 20 zugewandt. Die verbleibende Hälfte der Mantelfläche der Filterwechselvorrichtung 10 ist entsprechend dem äußeren Bereich 22 zugewandt. Die dem inneren Bereich 20 zugewandte Mantelfläche der Filterwechselvorrichtung 10 ist mit zwei aneinander angrenzenden Filterelementen 12 belegt / bestückt. Anstelle zweier Filterelemente 12, die jeweils einen Abschnitt der Mantelfläche der Filterwechselvorrichtung 10 mit einem Mittelpunktswinkel von 90° bedecken, kommen auch drei oder mehr Filterelemente 12 in Betracht, die dann jeweils einen Abschnitt der Mantelfläche der Filterwechselvorrichtung 10 mit einem Mittelpunktswinkel von 180°/n bedecken, wobei n die Anzahl der Filterelemente 12 bezeichnet. Neben einer solchen Unterteilung der Filterelemente 12 in horizontaler Richtung (Umfangsrichtung) kommt auch eine nicht gezeigte Unterteilung der Filterelemente 12 entlang der Längsachse, hier der mit der Längsachse zusammenfallenden Hochachse der Filterwechselvorrichtung 10, und mithin eine Unterteilung in vertikaler Richtung in Betracht.

Auch auf die bei der Ausführungsform in Figur 1 gezeigte Position der Filterwechselvorrichtung 10 bezüglich der Wandungen 14, 16 kommt es nicht entscheidend an. So kann die Filterwechselvorrichtung 10 bezüglich der Wandungen 14, 16 zum Beispiel auch so positioniert sein, dass bei stets unmittelbar an die Filterwechselvorrichtung 10 angrenzenden Wandungen 14, 16 nur ein Viertel von deren Mantelfläche dem inneren Bereich 20 und entsprechend drei Viertel von deren Mantelfläche dem äußeren Bereich 22 zugeordnet ist oder umgekehrt. Andere Teilungen sind ebenso möglich.

Die Filterwechselvorrichtung 10 ist um eine Drehachse 24 drehbar. Die Drehbarkeit ist in der Darstellung in Figur 1 mittels eines Doppelpfeils 26 veranschaulicht. Mittels einer Drehung der Filterwechselvorrichtung 10 um die Drehachse 24 ist ein mit seiner Außenfläche dem inneren Bereich 20 zugewandtes Filterelement 12 in den äußeren Bereich 22 drehbar und umgekehrt. Wenn bei der in Figur 1 gezeigten Ausführungsform die Filterwechselvorrichtung 10 aus der gezeigten Position um 180° gedreht wird, sind die beiden zuvor dem inneren Bereich 20 zugewandten Filterelemente 12 am Ende der Drehung dem äußeren Bereich 22 zugewandt und können dort entnommen und aufbereitet oder ersetzt werden. Währenddessen ist ein zuvor dem äußeren Bereich 22 zugewandter Oberflächenabschnitt der Filterwechselvorrichtung 10 dem inneren Bereich 20 zugewandt. Bei der in Figur 1 gezeigten Ausführungsform der Filterwechselvorrichtung 10 befindet sich auf diesem Oberflächenabschnitt kein Filterelement 12. In der gedrehten Konfiguration der Filterwechselvorrichtung 10 findet demnach keine Filtration oder Abscheidung statt. Dies ist erst wieder möglich, wenn die Filterwechselvorrichtung 10 nochmals um 180° gedreht oder um 180° zurückgedreht wird, so dass neue oder aufbereitete ("frische") Filterelemente 12 dem inneren Bereich 20 zugewandt sind.

Zur Verwendung der Filterwechselvorrichtung 10 wird diese zu gegebenen Zeitpunkten manuell oder mittels eines Antriebs segmentweise gedreht. Nach einer Anbringung frischer Filterelemente 12 wird die Filterwechselvorrichtung 10 so gedreht, dass diese dem inneren Bereich 20 zugewandt sind. Wenn ein Austausch der Filterelemente 12 notwendig ist, wird die Filterwechselvorrichtung 10 so gedreht, dass die Filterelemente 12 dem äußeren Bereich 22 zugewandt sind und dort ausgetauscht werden können. Dieser Vorgang wird bedarfsabhängig zyklisch wiederholt.

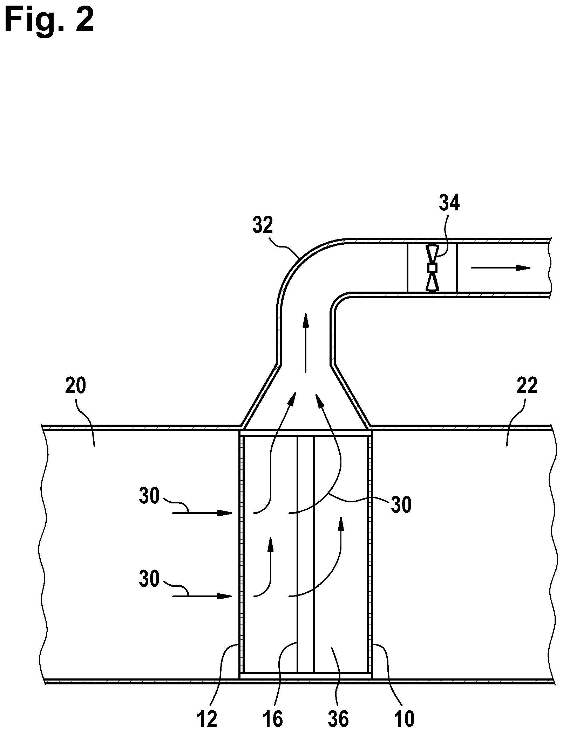

Beim Betrieb der Filterwechselvorrichtung 10, also zum Beispiel bei einem Betrieb einer Lackiereinrichtung (nicht gezeigt) im inneren Bereich 20, wird eine Luftströmung 30 durch die Filterwechselvorrichtung 10 erzeugt. Dies kann zum Beispiel mittels eines zumindest einseitig an die Filterwechselvorrichtung 10 angeschlossenen Kanalsystems 32 erfolgen, wie dies schematisch vereinfacht in Figur 2 gezeigt ist.

Die Darstellung in Figur 2 zeigt den inneren Bereich 20, den äußeren Bereich 22 und die Filterwechselvorrichtung 10 gemäß Figur 1 in einer Seitenansicht in einer Blickrichtung entlang einer der Wandungen 14, 16. Innerhalb des in Figur 1 nicht dargestellten Kanalsystems 32 befindet sich stromabwärts der Filterwechselvorrichtung 10 ein Gebläse 34 oder eine sonstige Strömungsmaschine. Beim Betrieb des Gebläses 34 ergibt sich stromabwärts der Filterwechselvorrichtung 10 ein Unterdruck und es wird Luft aus dem Innern der Filterwechselvorrichtung 10 und einem dortigen Strömungskanal 36 angesaugt (der Strömungskanal 36 fungiert als Saugkanal). Dies führt dazu, dass Luft aus dem inneren Bereich 20 in die Filterwechselvorrichtung 10 sowie durch davon aufgenommene und dem inneren Bereich 20 zugewandte Filterelemente 12 gesaugt wird (Luftströmung 30). Mit dem Durchtritt der angesaugten Luft durch die betreffenden Filterelemente 12 ergibt sich der angestrebte Filtrations- oder Abscheideeffekt. Als Alternative zu einem mittels eines Gebläses 34 stromabwärts der Filterwechselvorrichtung 10 erzeugten Unterdruck kommt auch ein im inneren Bereich 20 relativ zum Strömungskanal 36 und zum Innern des Kanalsystems 32 erzeugter Überdruck in Betracht. Dann wird durch den Überdruck Luft aus dem inneren Bereich 20 in die Filterwechselvorrichtung 10 und durch die dem inneren Bereich 20 zugewandten Filterelemente 12 gedrückt (Luftströmung 30). Das Innere der Filterwechselvorrichtung 10 und der dortige Strömungskanal 36 fungieren als Druckkanal. Mittels des an den Strömungskanal 36 anschließenden Kanalsystems 32 wird die aus dem inneren Bereich 20 abgesaugte oder herausgedrückte und mittels der jeweils wirksamen Filterelemente 12 von Farbpartikeln oder dergleichen befreite Luft abgeführt (Luftströmung 30) und zum Beispiel in die Umgebung abgelassen, Letzteres gegebenenfalls nach einer nochmaligen oder mehrmaligen Filtration der Luft.

Die Richtung einer Luftströmung 30, bei einem anderen Medium entsprechend die Richtung des jeweils bewegten Mediums (Gas oder ggf. auch ein flüssiges Medium oder eine Kombination gasförmiger und flüssiger Medien), durch das oder jedes angeströmte Filterelement 12 verläuft demnach in etwa orthogonal zu dem Strömungskanal 36 im Innern der Filterwechselvorrichtung 10, wobei der Strömungskanal 36 parallel oder zumindest im Wesentlichen parallel zu einer Längsachse der Filterwechselvorrichtung 10 verläuft. Die Luftströmung 30 wird demnach innerhalb der Filterwechselvorrichtung 10 um 90° umgelenkt und das bewegte und im Anschluss an den Durchtritt durch das oder jedes Filterelement 12 zum Beispiel von Farbpartikeln befreite Luftvolumen wird aus der Ebene mit dem inneren Bereich 20 in eine Ebene unterhalb oder oberhalb des inneren und äußeren Bereichs 20, 22 befördert, wo die Luft zum Beispiel weiter gefiltert, zurück in den inneren Bereich 20 geleitet oder ausgeblasen werden kann. Jedenfalls gelangt die Luft aus dem inneren Bereich 20 nach dem Durchströmen zumindest eines Filterelements 12 nicht in den äußeren Bereich 22. Die Umlenkung der Luftströmung 30 im Innern der Filterwechselvorrichtung 10 bewirkt auch, dass die Filterwechselvorrichtung 10 ausschließlich radial oder zumindest im Wesentlichen radial angeströmt wird, wobei die Richtung der Luftströmung 30, gleich ob aus dem inneren Bereich 20 oder gegebenenfalls teilweise aus dem äußeren Bereich 22, ausschließlich in Richtung auf das Innere der Filterwechselvorrichtung 10 weist. Eine Richtung der Luftströmung radial vom Innern der Filterwechselvorrichtung 10 weg und durch zumindest ein Filterelement 12 ist ausgeschlossen. Dies könnte zu einer Verunreinigung im äußeren Bereich 22 führen, was mit der in Figur 1 dargestellten Ausführungsform der Filterwechselvorrichtung 10 und auch den nachfolgend beschriebenen Ausführungsformen sicher vermieden wird.

Bei den nachfolgenden Erläuterungen wird - ohne Verzicht auf eine weitergehende Allgemeingültigkeit - von einer Erzeugung eines Unterdrucks stromabwärts der Filterwechselvorrichtung 10 mittels eines Gebläses 34 ausgegangen. Das damit bewirkte Ansaugen von Luft erfolgt ausschließlich aus dem inneren Bereich 20, wenn diesem, wie dies in der Darstellung in Figur 1 gezeigt ist, die Filterelemente 12 vollständig zugewandt sind. Ein Ansaugen von Luft aus dem äußeren Bereich 22 ist durch eine geschlossene Ausführung einer den Filterelementen 12 gegenüberliegenden Rückseite der Filterwechselvorrichtung 10 verhindert. Wenn die Filterwechselvorrichtung 10 zum Austausch eines oder mehrerer Filterelemente 12 gedreht wird, wird kurzzeitig - gewissermaßen als Nebenluft - auch Luft aus dem äußeren Bereich 22 angesaugt. Wenn die Filterwechselvorrichtung 10 vollständig gedreht ist, so dass die beiden in Figur 1 gezeigten Filterelemente 12 vollständig dem äußeren Bereich 22 zugewandt sind, wird keine Luft mehr aus dem inneren Bereich 20 und nur noch nicht kontaminierte Luft aus dem äußeren Bereich 22 angesaugt. In jedem Fall bleibt der äußere Bereich 22 frei von Schwebeteilchen, zum Beispiel Farbpartikeln, wie sie sich im inneren Bereich 20 befinden und zum Austausch eines Filterelements 12 muss einerseits der kontaminierte innere Bereich 20 nicht betreten werden und andererseits der Lackierbetrieb oder ein sonstiger dort stattfindender Prozess nicht unterbrochen werden.

Bei der in Figur 1 gezeigten Ausführungsform der Filterwechselvorrichtung 10 weist diese einen im Wesentlichen hohlzylindrischen Rahmen 40 auf. Das Innere des Rahmens 40 fungiert als Strömungskanal 36. Seitlich ist die Filterwechselvorrichtung 10 gegen die angrenzenden Wandungen 14, 16 mittels jeweils einer Dichtung 42 abgedichtet.

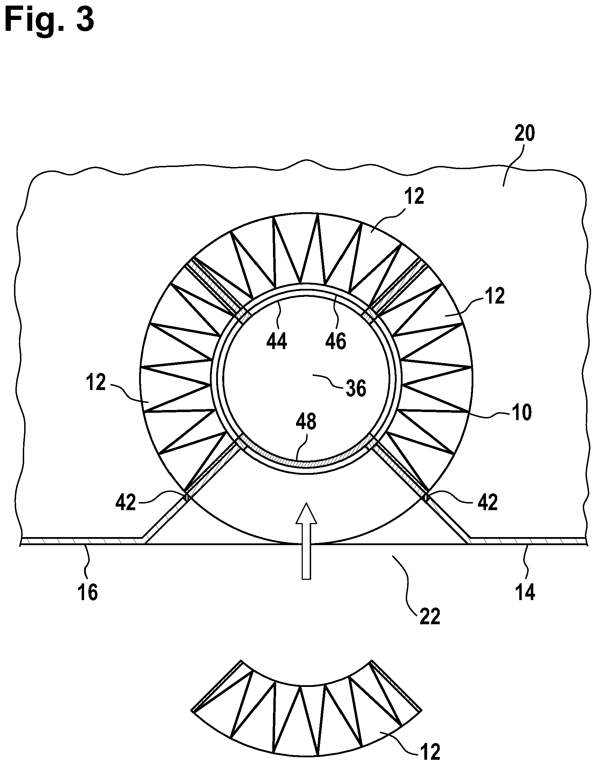

Anstelle der in Figur 1 gezeigten Filterelemente 12 sind auch Filterelemente 12 mit einer in radialer Richtung der Filterwechselvorrichtung 10 gemessenen größeren Tiefe möglich und sinnvoll. Insoweit zeigt die Darstellung in Figur 3 eine Draufsicht auf eine Ausführungsform der Filterwechselvorrichtung 10 mit Filterelementen 12 mit einer größeren Tiefe, wobei die dortige Filterwechselvorrichtung 10 entlang ihrer kompletten Umfangslinie mit Filterelementen 12 versehen ist oder versehen werden kann. Die Filterwechselvorrichtung 10 ist im Vergleich zu der in Figur 1 gezeigten Konfiguration in einer Einbausituation dargestellt, bei der die Filterwechselvorrichtung 10 vollständig auf einer Seite einer durch die beiden Wandungen 14, 16 definierten Ebene liegt, hier auf der Seite des inneren Bereichs 20. Dies ermöglicht einen einfachen Abschluss der Filterwechselvorrichtung 10 auf Seiten des äußeren Bereichs 22 zum Beispiel mittels einer Tür, einer Klappe oder eines sonstigen Verschlusses (nicht gezeigt). Auch der innere Bereich 20 kann mittels einer Tür, einer Klappe oder eines sonstigen Verschlusses gegen die Umgebung abgeschlossen werden, speziell wenn der innere Bereich 20 als Lackierkabine oder dergleichen fungiert. Im inneren Bereich 20 kann dann zum Beispiel - als Alternative zur Verwendung eines Gebläses 34 stromabwärts der Filterwechselvorrichtung 10 - ein Überdruck gegenüber dem Strömungskanal 36 im Innern der Filterwechselvorrichtung 10 aufgebaut werden, so dass der innere Bereich 20 als Druckkammer fungiert und eine Luftströmung 30 durch die Filterelemente 12 ins Innere der Filterwechselvorrichtung 10 resultiert.

Die Wandungen 14, 16 reichen unter einem Winkel bis direkt an die Außenoberfläche Filterwechselvorrichtung 10 heran und aufgrund der Position der Wandungen 14, 16 sind drei Viertel der Mantelfläche der Filterwechselvorrichtung 10 dem inneren Bereich 20 und ein Viertel der Mantelfläche der Filterwechselvorrichtung 10 dem äußeren Bereich 22 zugewandt. Die in oder an dem dem inneren Bereich 20 zugewandten Teil der Filterwechselvorrichtung 10 platzierten Filterelemente 12 sind als Abscheider oder Filter wirksam. Die in oder an dem dem äußeren Bereich 22 zugewandten Teil der Filterwechselvorrichtung 10 platzierten Filterelemente 12 können zum Ersatz gegen frische Filterelemente 12 ohne ein Betreten des inneren Bereichs 20 an der Filterwechselvorrichtung 10 entnommen werden. Im unteren Bereich der Darstellung in Figur 3 ist insoweit ein einzelnes Filterelement 12 gezeigt. Dabei handelt es sich zum Beispiel um ein frisches Filterelement 12, welches anstelle eines zuvor an der Filterwechselvorrichtung 10 entnommenen Filterelements 12 an oder in der Filterwechselvorrichtung 10 platziert wird, wie dies durch den Blockpfeil veranschaulicht ist.

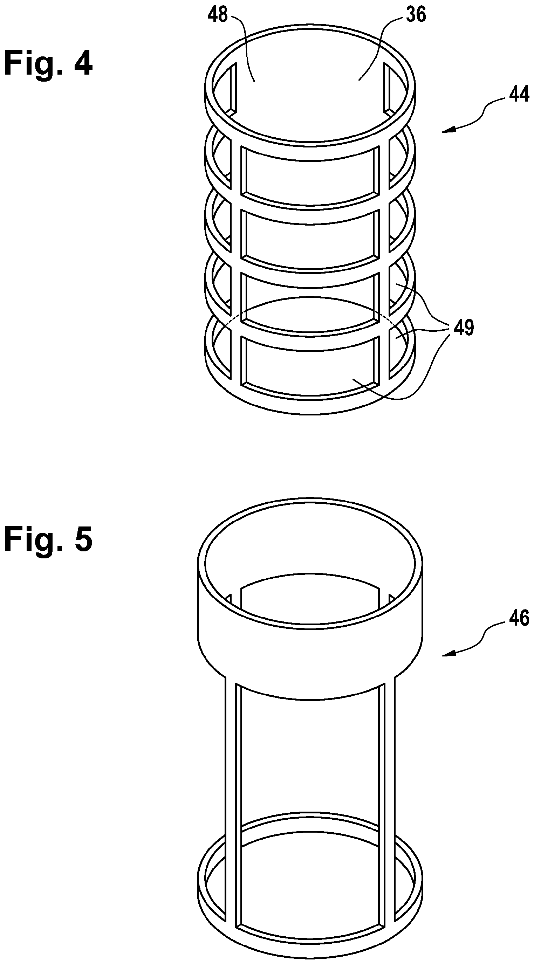

Bei der in Figur 3 gezeigten Ausführungsform der Filterwechselvorrichtung 10 weist diese zwei konzentrische Rohre 44, 46 auf, wobei die beiden Rohre 44, 46 zur Unterscheidung als Innenrohr 44 und Außenrohr 46 bezeichnet werden. Das Außenrohr 46 fungiert als Rahmen 40 der Filterwechselvorrichtung 10. Die Darstellungen in Figur 4 und Figur 5 zeigen perspektivische Ansichten des Innenrohrs 44 bzw. des Außenrohrs 46 ohne sonstige Einzelheiten der Filterwechselvorrichtung 10. Das Innenrohr 44 ist drehfest installiert und bildet gewissermaßen die Basis der Filterwechselvorrichtung 10. Das Innere des Innenrohrs 44 fungiert als Strömungskanal 36. Das Innenrohr 44 kann demnach auch als Wandung 44 des Strömungskanals 36 aufgefasst werden. Das Innenrohr 44/die Wandung 44 weist eine Mehrzahl von Durchbrüchen 49 auf, die sich beim gezeigten Ausführungsbeispiel aufgrund der gitterartigen Struktur des Innenrohrs 44 mit horizontalen und vertikalen Streben ergeben. Die Besonderheit des Innenrohrs 44 besteht in einem schildförmigen Abschnitt (Schild 48). Das Schild 48 des Innenrohrs 44 deckt die Rückseite des oder jedes dem äußeren Bereich 22 zugewandten Filterelements 12 ab. Weil das Schild 48 frei von Durchbrüchen 49 ist, bewirkt diese Abdeckung, dass über dem äußeren Bereich 22 zugewandte Filterelemente 12 kein Zugang zum Innern der Filterwechselvorrichtung 10 und zum dortigen Strömungskanal 36 gegeben ist. Das Schild 48 grenzt also den Strömungskanal 36 gegenüber dem äußeren Bereich 22 ab. Das Innenrohr 44 ist demnach derart mit Durchbrüchen 49 versehen, dass diese nur eine aus einem der beiden Bereiche 20, 22 stammende Luftströmung 30 in das Innere der Filterwechselvorrichtung 10 zulässt, hier nur eine Luftströmung aus dem inneren Bereich 20.

Bei der in Figur 4 gezeigten Ausführungsform erstreckt sich das Schild 48 entsprechend über einen Abschnitt des Innenrohrs 44 mit einem Mittelpunktswinkel von 90°, weil die Öffnung zum äußeren Bereich 22 bei der in Figur 3 gezeigten Position der Filterwechselvorrichtung 10 ebenfalls eine solche Größe hat. Bei anderen Positionen der Filterwechselvorrichtung 10 bezüglich der angrenzenden Wandungen 14, 16 ist eine andere Größe des Schilds 48 erforderlich. Anstelle eines Schilds 48 als Teil eines Innenrohrs 44 kommt auch ein Schild 48 in Form eines Rohrsegments (Hohlzylindersegments) mit einer zum Beispiel einem Mittelpunktswinkel von 90° einschließenden Mantelfläche, also ohne weitergehende "Rohrabschnitte", in Betracht.

Das als Rahmen 40 fungierende Außenrohr 46 (Fig. 5) ist um das Innenrohr 44 drehbar. Dafür können sich zwischen dem Innen- und dem Außenrohr 44, 46 nicht gezeigte Lager und/oder Abstandshalter befinden. Am dem als Rahmen 40 fungierenden Außenrohr 46 sind Filterelemente 12 anbringbar, zum Beispiel Filterelemente 12 in Form von Filtermatten, wie dies in der Darstellung in Figur 1 gezeigt ist. Bei einem Außenrohr 46 mit einer stärker gitterartigen Struktur, zum Beispiel einer Struktur mit entlang der Umfangslinie des Außenrohrs 46 umlaufenden horizontalen Stegen, wie sie in Figur 4 für das Innenrohr 44 gezeigt ist, können anstelle eines Filterelements 12 in Form einer durchgehenden Filtermatte auch Filterelemente 12 in Form von im Vergleich dazu kleineren Filtermattenabschnitten (Segmente) an dem Außenrohr 46 angebracht werden.

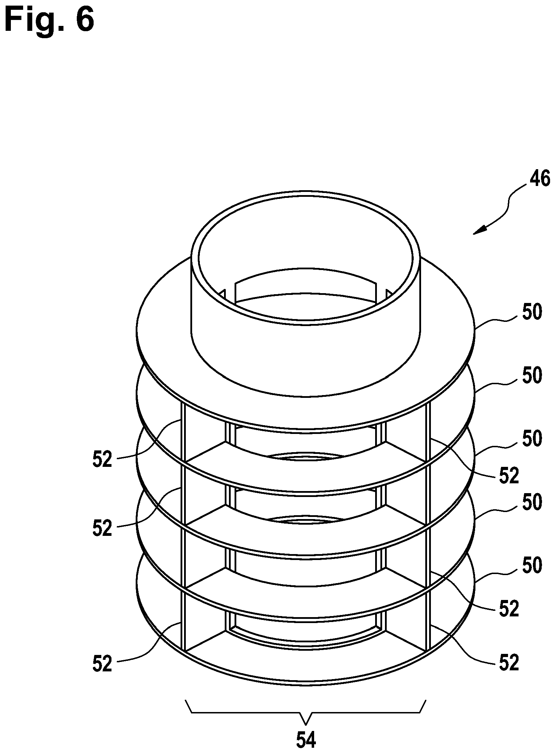

Eine weitere Variante einer Filterwechselvorrichtung 10 mit einem aus zwei oder mehr getrennt, also unabhängig voneinander austauschbaren Segmenten gebildeten Filterelement 12 basiert auf einer Ausführungsform des als Rahmen 40 fungierenden Außenrohrs 46, wie sie exemplarisch in der Darstellung in Figur 6 gezeigt ist. Das dortige Außenrohr 46 weist mehrere radial umlaufende und entlang der Höhe des Außenrohrs 46 äquidistant beabstandete Auflageflächen 50 auf, auf denen jeweils zumindest ein Segment eines Filterelements 12 platzierbar ist, wie dies grundsätzlich bereits in der Darstellung in Figur 3 gezeigt ist, wenn man eine dort gezeigte Bodenfläche der Filterwechselvorrichtung 10 als Auflagefläche 50 auffasst. Zwischen zwei Auflageflächen 50 sind jeweils gleicharte Segmente eines Filterelements 12 platzierbar. Die modularen Teile eines solchen Filterelements 12 werden im Folgenden als Filtermodule 12 bezeichnet. Die Begriffe Segment, nämlich ein Segment eines Filterelements 12, und Filtermodul 12 bezeichnen damit denselben Gegenstand. Das als Rahmen 40 fungierende Außenrohr 46 ist mit seinen Auflageflächen 50 zur Aufnahme von im weitesten Sinne quaderförmigen Filtermodulen 12 ausgebildet. Bei einer bevorzugten Ausführungsform werden Filtermodule 12 verwendet, welche die Raumform eines Hohlzylindersegments aufweisen. Dann lassen sich die Filtermodule 12 im Wesentlichen fugenfrei auf den Auflageflächen 50 platzieren. Als Filtermodule 12 - genauer als Filter- und/oder Abscheidemodule 12 - kommen grundsätzlich beliebige Ausführungsformen in Betracht. Die jeweiligen Module 12 weisen entsprechend zumindest ein übliches Filtermedium und/oder in grundsätzlich an sich bekannter Art und Weise realisierte Abscheideflächen auf, zum Beispiel indem die Module 12 nach Art der in der eingangs genannten EP 2 532 409 A1 beschriebenen Module mit einem Papiergelege als Abscheidefläche ausgeführt sind. Zusätzlich oder alternativ kommt auch eine Ausführungsform in Betracht, bei der die Module 12 als sogenannte Prallabscheider fungieren und im Innern zum Beispiel ein mittels mehrfach gefalteter Pappflächen gebildetes Labyrinth aufweisen. Als Filtermodule 12 kommen Taschen-, Beutel- oder sogenannte Kompaktfilter in Betracht.

Die in Figur 6 als vertikale Verstrebungen zwischen zwei benachbarten Auflageflächen 50 gezeigten Flächen sind bei dieser Ausführungsform nicht zwingend notwendig, fungieren aber als Anlagefläche und als Seitenwände 52 für auf den Auflageflächen 50 platzierte Filtermodule 12. Zudem segmentieren solche Seitenwände 52 das Außenrohr 46 und die Filterwechselvorrichtung 10 insgesamt. Die in axialer Richtung übereinanderliegenden Seitenwände 52 oder - je nach Ausführungsform - in axialer Richtung durchgehende, insbesondere einstückige Seitenwände 52 definieren jeweils eine Ebene und ein Bereich zwischen zwei benachbarten derartigen Ebenen stellt ein Teilsegment 54 der Filterwechselvorrichtung 10 dar. In einem solchen Teilsegment 54 gewährleisten die Seitenwände 52 eine Trennung eines noch zu dem jeweiligen Teilsegment 54 gehörigen Filtermoduls 12 von einem bereits zu dem nächsten Teilsegment 54 gehörigen benachbarten Filtermodul 12. Mit anderen Worten gewährleisten die Seitenwände 52, dass an den Teilsegmentgrenzen alle von dem jeweiligen Teilsegment 54 umfassten Filtermodule 12 enden und dass kein Filtermodul 12 aus einem Teilsegment 54 in ein benachbartes Teilsegment 54 hineinragt.

Ein Außenrohr 46 der in Figur 6 gezeigten Art ist demnach ein Beispiel für einen Rahmen 40, hier ein Teil eines Rahmens 40, mittels dessen mehrere horizontal um die Drehachse 24 der Filterwechselvorrichtung 10 angeordnete Teilsegmente 54 (auf und zwischen den Auflageflächen 50) sowie vertikal entlang der Drehachse 24 angeordnete Teilsegmente 54 (zwischen den Seitenwänden 52) gebildet werden.

Bei einer Drehung des Außenrohrs 46 um das Innenrohr 44 werden jeweils einzelne auf den Auflageflächen 50 platzierte Filtermodule 12 dem inneren Bereich 20 zugewandt und andere Filtermodule 12 entsprechend dem äußeren Bereich 22 zugewandt. Bei einer Segmentierung der Filterwechselvorrichtung 10 mittels axialer Seitenwände 52 sind bei bestimmten Drehpositionen des Außenrohrs 46 alle Filtermodule 12 zumindest eines Teilsegments 54 dem inneren Bereich 20 und alle Filtermodule 12 zumindest eines anderen Teilsegments 54 dem äußeren Bereich 22 zugewandt.

Bei einer Ausführungsform der Filterwechselvorrichtung 10 gemäß Figur 3 - wenn man die dort gezeigten Filterelemente 12 als Filtermodule 12, die dort gezeigte Bodenfläche der Filterwechselvorrichtung 10 als eine der Auflageflächen 50 und die Grenzflächen zwischen jeweils zwei benachbarten Filtermodulen 12 als Seitenwände 52 auffasst - sind jeweils drei Teilsegmente 54 der Filterwechselvorrichtung 10 dem inneren Bereich 20 zugewandt und das verbleibende Teilsegment 54 ist dem äußeren Bereich 22 zugewandt. Mittels einer Drehung der Filterwechselvorrichtung 10 um genau 90° (bei anderen Teilsegmentgrößen oder einer anderen Position der Filterwechselvorrichtung 10 bezüglich der Wandungen 14, 16 gelten andere Winkelgrößen) wird ein zuvor dem äußeren Bereich 20 zugewandtes Teilsegment 54 in den inneren Bereich 22 gedreht, so dass dort die in diesem Teilsegment 54 platzierten Filtermodule 12 entnommen und durch frische Filtermodule 12 ersetzt werden können. Aufgrund der Drehung eines Teilsegments 54 in den äußeren Bereich 22 resultiert eine Drehung eines zuvor dem äußeren Bereich 22 zugewandten Teilsegments 54 in den inneren Bereich 20, so dass mittels einer solchen Drehung zum Beispiel ein zwischenzeitlich mit frischen Filtermodulen 12 bestücktes Teilsegment 54 in den inneren Bereich 20 gelangt und dort zur Filtration/Abscheidung wirksam wird. Auf diese Weise ist ein sukzessiver Austausch von Filtermodulen 12 gegen frische Filtermodule 12 möglich, wobei der jeweilige Prozess, der die Filtration/Abscheidung notwendig macht, währenddessen unverändert fortgesetzt werden kann. Auch hierbei ist jeweils wieder gewährleistet, dass für einen derartigen Austausch der Filtermodule 12 der innere Bereich 20 nicht betreten werden muss.

Aufgrund des drehfesten Schilds 48 oder eines Schilds 48 als Teil eines drehfesten Innenrohrs 44 sowie der an den Außenkanten der Seitenwände 52 anstoßenden Wandungen 14, 16 erfolgt bei dieser Ausführungsform der Filterwechselvorrichtung 10 auch kein Ansaugen von Umgebungsluft aus dem äußeren Bereich 22 in den Strömungskanal 36, so dass eine beispielsweise mittels eines Gebläses 34 erzeugte Luftströmung 30 durch die Filterwechselvorrichtung 10 vollständig für die Filtration/Abscheidung zur Verfügung steht und die Luftströmung 30 in die Filterwechselvorrichtung 10 und deren Strömungskanal 36 nur die dem inneren Bereich 20 zugewandten Filtermodule 12 durchdringt.

Bei dieser Ausführungsform der Filterwechselvorrichtung 10 sind die Anzahl der stets gleich großen Teilsegmente 54 und die Position der Filterwechselvorrichtung 10 bezüglich der Wandungen 14, 16 so aufeinander abgestimmt, dass die Wandungen 14, 16 bei bestimmten Drehpositionen der Filterwechselvorrichtung 10 gleichzeitig an den Außenkanten zweier benachbarter und damit jeweils ein Teilsegment 54 einschließender Seitenwände 52 anstoßen. Solche Drehpositionen werden im Folgenden kurz als Arbeitsposition der Filterwechselvorrichtung 10 bezeichnet, denn in einer solchen Drehposition ist zumindest ein Teilsegment 54 mit dessen Filtermodulen 12 vollständig dem inneren Bereich 20 zugewandt und diese sind damit zur Filtration/Abscheidung wirksam. Bei einer Filterwechselvorrichtung 10 mit vier Teilsegmenten 54, wie dies in Figur 3 und in Figur 6 mit der dortigen Darstellung eines entsprechend segmentierten Außenrohrs 46 gezeigt ist, hat die Filterwechselvorrichtung 10 vier Arbeitspositionen. Ausgehend von einer momentanen Arbeitsposition der Filterwechselvorrichtung 10 wird eine weitere Arbeitsposition entsprechend durch eine Drehung der Filterwechselvorrichtung 10 um 90° erreicht. Bei einer anderen Segmentierung der Filterwechselvorrichtung 10 ergibt sich eine andere Anzahl von Teilsegmenten 54 und entsprechend eine andere Anzahl von Arbeitspositionen sowie ein von 90° unterschiedlicher Drehwinkel für eine Drehung der Filterwechselvorrichtung 10 aus einer momentanen Arbeitsposition in eine weitere Arbeitsposition. Beim Betrieb der Filterwechselvorrichtung 10 wird diese manuell oder automatisch oder teilautomatisch mittels eines Antriebs segmentweise aus einer Arbeitsposition in eine weitere Arbeitsposition gedreht. Nach jeder segmentweisen Drehung befindet sich ein Teilsegment 54, welches zuvor dem inneren Bereich 20 zugewandt war, im äußeren Bereich 22, so dass dessen Filtermodule 12 dort ausgetauscht werden können. Nach einem solchen Austausch kann eine weitere segmentweise Drehung der Filterwechselvorrichtung 10 erfolgen. Beim automatischen oder teilautomatischen Drehen der Filterwechselvorrichtung 10 ist dieser bevorzugt eine Sensorik zugeordnet, mittels derer eine jeweilige Bestückung des oder jedes dem äußeren Bereich 22 zugewandten Teilsegments 54 mit Filtermodulen 12 erkennbar ist. Auf Basis eines von einer solchen Sensorik erhältlichen Sensorsignals ist eine automatische oder teilautomatische Drehung der Filterwechselvorrichtung 10 nur möglich, wenn ein bei einer solchen Drehung in den inneren Bereich 20 rotiertes Teilsegment 54 vollständig bestückt ist. Bei der Verwendung der Filterwechselvorrichtung 10 wird der Vorgang des bedarfsabhängigen segmentweisen Drehens der Filterwechselvorrichtung 10 und des Ersetzens jeweils einzelner Filtermodule 12 im äußeren Bereich 22 zyklisch fortgeführt.

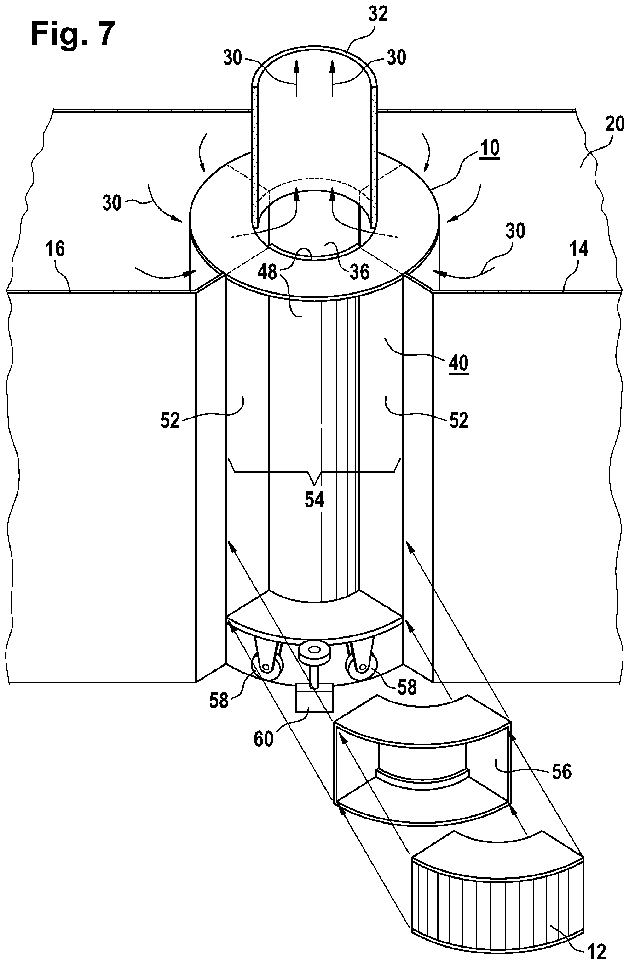

Die Darstellung in Figur 7 zeigt eine Ausführungsform der Filterwechselvorrichtung 10 mit einem drehfesten Schild 48. Die Filterwechselvorrichtung 10 ist insgesamt um den Strömungskanal 36 drehbar. Aufgrund des Schilds 48 im Innern der Filterwechselvorrichtung 10 ist der Strömungskanal 36 derart ausgebildet, dass dieser eine Luftströmung 30 nur aus dem inneren Bereich 20 an ein weiterführendes Kanalsystem 32 erlaubt und eine Luftströmung 30 aus dem äußeren Bereich 22 an das weiterführende Kanalsystem 32 verhindert. Auf der dem äußeren Bereich 22 zugewandten "Rückseite" des Schilds 48 ist ein Austausch einzelner Filtermodule 12 durch frische Filtermodule 12 möglich, ohne dass dafür der innere Bereich 20 betreten werden oder der dort stattfindende Prozess unterbrochen werden muss. Bei der in Figur 7 gezeigten Ausführungsform weist der Rahmen 40 der Filterwechselvorrichtung 10 keine Auflageflächen 50 auf, wie dies in Figur 6 gezeigt ist. Einzelne Filtermodule 12 lassen sich bei einer solchen Ausführung des Rahmens 40 zwischen dessen Seitenwänden 52 aufeinander stapeln oder werden mittels eines jeweils zumindest ein Filtermodul 12 aufnehmenden Gehäuses 56 und durch Stapeln der Gehäuse 56 in der Filterwechselvorrichtung 10 platziert. Ein derartiges Gehäuse 56 ist ein Beispiel für einen gemeinsam mit dem Filtermodul 12 aus der Filterwechselvorrichtung 10 entnehmbaren Rahmen. Die Entnehmbarkeit jeweils zumindest eines Filtermoduls 12 mittels eines jeweils zumindest ein Filtermodul 12 aufnehmenden Gehäuses 56 erleichtert das Hantieren mit den Filtermodulen 12, zumindest mit solchen Filtermodulen 12, die bereits Farbpartikel oder dergleichen aufgenommen haben.

Bei der in Figur 7 gezeigten Ausführungsform der Filterwechselvorrichtung 10 sind am Boden des Rahmens 40 Laufrollen 58 gezeigt. Mittels solcher Laufrollen 58 oder ähnlicher Einrichtungen ist eine leichte Drehbarkeit der Filterwechselvorrichtung 10 gewährleistet. Zum Antrieb der Filterwechselvorrichtung 10 kann zum Erhalt einer Drehung der Filterwechselvorrichtung 10 zum Beispiel ein Reibradantrieb 60 vorgesehen sein, wie dies vereinfacht in der Darstellung in Figur 7 gezeigt ist. Der jeweilige Antrieb 60 befindet sich bevorzugt auf der Seite des äußeren Bereichs 22, um Verschmutzungen zu vermeiden und eine Wartung zu erleichtern. Die in Figur 7 gezeigte Position des Reibradantriebs 60 ist willkürlich und vor allem dessen sichtbarer Darstellung geschuldet. Anstelle eines Reibradantriebs 60 mit horizontal orientiertem Reibrad kann sich zum Beispiel auch ein Reibradantrieb 60 mit einem vertikal orientierten und an der Unterseite des Rahmens 40 angreifenden Reibrad unter der Filterwechselvorrichtung 10 befinden. Alternativ zu einem Reibradantrieb 60 kommen auch andere Antriebsformen in Betracht, zum Beispiel indem die Filterwechselvorrichtung 10 ein umlaufendes Zahnprofil aufweist (entweder in Form von nach innen oder nach außen gewandten Zähnen) und der Antrieb mittels eines in das Zahnprofil eingreifenden, elektromotorisch angetriebenen Ritzels erfolgt. Eine nochmals weitere Möglichkeit zum Antrieb der Filterwechselvorrichtung 10 besteht in Form eines Riemenantriebs mit einem zum Beispiel um die Mantelfläche der Filterwechselvorrichtung 10 geführten Treibriemen, Zahnriemen oder alternativ einer Kette. Die Kraftübertragung auf die Filterwechselvorrichtung 10 zu deren Drehung erfolgt jeweils mechanisch (Reibschluss oder Formschluss; mittels eines Reibrads, eines Zahnradgetriebes oder eines Reibriemengetriebes). Insoweit wird der Antrieb als mechanischer Antrieb bezeichnet. Die Antriebsenergie wird je nach Ausführungsform zum Beispiel mittels eines Elektromotors aufgebracht.

Bei einer besonderen Ausführungsform der Filterwechselvorrichtung 10 kann eine rastende Arretierung der Filterwechselvorrichtung 10 in einer Arbeitsposition vorgesehen sein, etwa indem an einer Außenkante einer Seitenwand 52 oder am Ende einer Wandung 14, 16 Rastmittel angebracht sind, die lösbar mit der Wandung 14, 16 bzw. einer Seitenwand 52 der Filterwechselvorrichtung 10 verrasten. Alternativ oder zusätzlich kann zur rastenden Arretierung der Filterwechselvorrichtung 10 ein im Boden unter der Filterwechselvorrichtung 10 angebrachtes Rastmittel, zum Beispiel ein Federstift oder dergleichen, der in einer dafür vorgesehenen Ausnehmung auf einer Unterseite der Filterwechselvorrichtung 10 eingreift, vorgesehen sein.

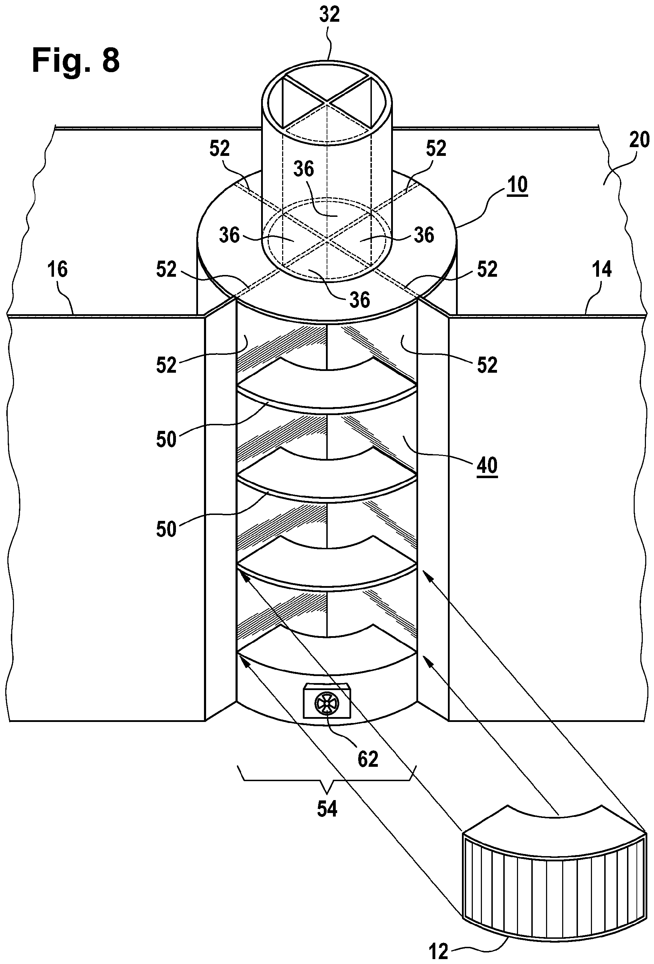

Die Darstellung in Figur 8 zeigt eine spezielle Ausführungsform der Filterwechselvorrichtung 10, welche ohne einen Rahmen 40 in Form eines Innenrohrs 44 und eines Außenrohrs 46 auskommt. Stattdessen wird der Rahmen 40 durch entlang der Mittellängsachse (Drehachse 24) der Filterwechselvorrichtung 10 aufeinandertreffende Seitenwände 52 und zwischen den Seitenwänden 52 befindliche sowie entlang der Mittellängsachse der Filterwechselvorrichtung 10 regelmäßig beabstandete Auflageflächen 50 gebildet. Die Anordnung der Auflageflächen 50 entspricht der bereits anhand der Darstellung in Figur 6 erläuterten Anordnung. Auf den Auflageflächen 50 ist jeweils zumindest ein in der Darstellung in Figur 8 rechts unten gezeigtes Filtermodul 12 platzierbar. Jeweils zwei benachbarte Seitenwände 52 begrenzen ein Teilsegment 54 der Filterwechselvorrichtung 10 und die Besonderheit dieser Ausführungsform der Filterwechselvorrichtung 10 besteht darin, dass ein oder mehrere Teilsegmente 54 den inneren Bereich 20 gegen den äußeren Bereich 22 verschließen und dass jedes Teilsegment 54 gewissermaßen seinen eigenen Strömungskanal 36 definiert. Ein solcher eigener Strömungskanal 36 ergibt sich, weil innerhalb eines Teilsegments 54 auf der Rückseite der hohlzylindersegmentförmigen Filtermodule 12 ein durch die Seitenwände 52 eingeschlossener Freiraum bleibt, der sich entlang der gesamten Höhe der Filterwechselvorrichtung 10 erstreckt. Dieser Freiraum bildet jeweils einen Teil des Strömungskanals 36. Der Verschluss des inneren Bereichs 20 gegen den äußeren Bereich 22 mittels eines oder mehrerer Teilsegmente 54 erfolgt bei einer Konfiguration der in Figur 8 dargestellten Art mittels der beiden jeweils ein Teilsegment 54 begrenzenden Seitenwände 52. Bei einer anderen Konfiguration (andere Anzahl von Teilsegmenten 54 und/oder andere Position der Filterwechselvorrichtung 10 bezüglich der Wandungen 14, 16) erfolgt der Verschluss des inneren Bereichs 20 gegen den äußeren Bereich 22 mittels zweier Seitenwände 52 unterschiedlicher Teilsegmente 54. Jedenfalls ist jedes Teilsegment 54 mit dessen mindestens einer Seitenwand 52 so ausgebildet, dass es die Bereiche 20, 22 gegeneinander verschließen kann oder an einem solchen Verschluss teilnimmt.

Zumindest eine Seitenwand 52 eines Teilsegments 54 kann zusammen mit zumindest den Auflageflächen 50 des jeweiligen Teilsegments 54 auch als Rahmen 40 des Teilsegments 54 aufgefasst werden (Teilsegmentrahmen 40). Zusammen mit anderen Teilsegmentrahmen 40 bildet ein solcher Teilsegmentrahmen 40 den Rahmen 40 der Filterwechselvorrichtung 10. Insoweit ist die in Figur 8 gezeigte Ausführungsform der Filterwechselvorrichtung 10 ein Beispiel für eine Filterwechselvorrichtung 10, bei der zwei oder mehr derartige Teilsegmentrahmen 40 einen Strömungskanal 36 innerhalb der Filterwechselvorrichtung 10 bilden. Als Strömungskanal 36 oder Teil des Strömungskanals 36 im Innern der Filterwechselvorrichtung 10 fungiert der von je zwei Seitenwänden 52 eingeschlossene Freiraum "hinter" den in einem Teilsegment 54 platzierten Filterelementen 12.

Die in Figur 8 gezeigte Ausführungsform ist ein weiteres Beispiel für einen Rahmen 40 der Filterwechselvorrichtung 10, mittels dessen mehrere horizontal um die Drehachse 24 der Filterwechselvorrichtung 10 angeordnete Teilsegmente 54 (auf und zwischen den Auflageflächen 50) und vertikal entlang der Drehachse 24 angeordnete Teilsegmente 54 (zwischen den Seitenwänden 52) gebildet werden. Jedes Teilsegment 54 umfasst als Rahmen 40 (Teilsegmentrahmen 40) zumindest eine Seitenwand 52 und eine Mehrzahl von äquidistant beabstandeten Auflageflächen 50. Die Seitenwand 52 ist radial zur Drehachse 24 der Filterwechselvorrichtung 10 orientiert und reicht von der äußeren Mantelfläche der Filterwechselvorrichtung 10 bis zu deren Drehachse 24. Dort treffen sich alle Seitenwände 52. Die zumindest eine Seitenwand 52 jedes Teilsegments 54 unterteilt den Querschnitt des Strömungskanals 36 im Innern der Filterwechselvorrichtung 10 in entsprechend der Anzahl der Teilsegmente 54 gleich große Segmente.

Die nachfolgende Beschreibung wird - ohne Verzicht auf eine weitergehende Allgemeingültigkeit - anhand der in Figur 8 gezeigten Konfiguration und Position der Filterwechselvorrichtung 10 fortgesetzt, also einer Filterwechselvorrichtung 10 mit genau vier Teilsegmenten 54, wobei die Filterwechselvorrichtung 10 bezüglich der Wandungen 14, 16 so positioniert ist, dass in einer Arbeitsposition der Filterwechselvorrichtung 10 genau ein Teilsegment 54 dem äußeren Bereich 22 und genau drei Teilsegmente 54 dem inneren Bereich 20 zugewandt sind. Dies ist ein Beispiel für eine Konfiguration, bei der die Filterwechselvorrichtung 10 bezüglich der Wandungen 14, 16 derart platziert ist, dass nur komplette Teilsegmente 54 (vertikale Teilsegmente 54) und deren Filtermodule 12 in einem der Bereiche 20, 22 durchströmbar sind. Ein dem inneren Bereich 20 zugewandtes Teilsegment 54 wird im Folgenden kurz als inneres Teilsegment 54 und entsprechend ein dem äußeren Bereich 22 zugewandtes Teilsegment 54 als äußeres Teilsegment 54 bezeichnet. Die bei einer anderen Position der Filterwechselvorrichtung 10 bezüglich der Wandungen 14, 16 und/oder bei einer Filterwechselvorrichtung 10 mit mehr oder weniger als vier Teilsegmenten 54 resultierenden Verhältnisse sind im Folgenden stets mitzulesen.

Bei der gezeigten Filterwechselvorrichtung 10 sind die drei inneren Teilsegmente 54 an ein hier beispielhaft oberhalb der Filterwechselvorrichtung 10 gezeigtes weiterführendes Kanalsystem 32 angeschlossen, während für das äußere Teilsegment 54 kein derartiger Anschluss besteht. Dies ist zum Beispiel derart realisiert, dass ein entsprechend der Segmentierung der Filterwechselvorrichtung 10 unterteilter Abschnitt des Kanalsystems 32 oberhalb des äußeren Teilsegments 54 verschlossen ist, wie dies schematisch vereinfacht in der Darstellung in Figur 8 und dem dortigen Schnitt durch einen Abschnitt des Kanalsystems 32 gezeigt ist. Ein gleichwirkender Verschluss lässt sich auch beim Übergang von der Filterwechselvorrichtung 10 auf das Kanalsystem 32 realisieren, etwa indem eine dortige Deckelfläche oberhalb des äußeren Teilsegments 54 keine Öffnung aufweist, welche einen Übertritt einer Luftströmung aus der Filterwechselvorrichtung 10 in das Kanalsystem 32 erlauben würde. Dies sind Beispiele für eine mögliche Realisierung, bei welcher der Strömungskanal 36 im Innern der Filterwechselvorrichtung 10 derart ausgebildet ist, dass dieser eine Luftströmung 30 aus einem der Bereiche 20, 22, hier dem äußeren Bereich 22, an ein weiterführendes Kanalsystem 32 verhindert.

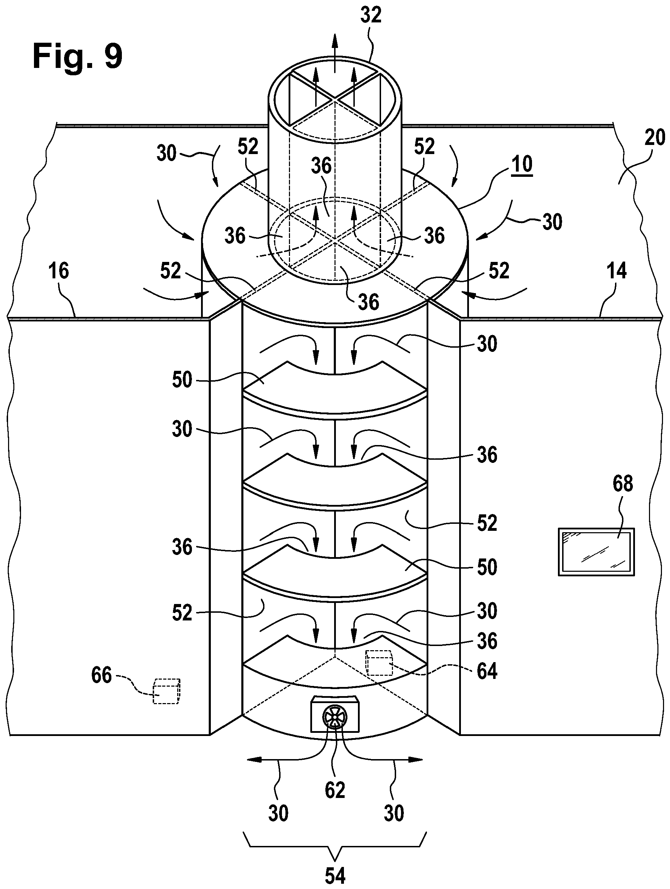

Die Darstellung in Figur 8 zeigt darüber hinaus auch ein bei der gezeigten Ausführungsform am Fuß der Filterwechselvorrichtung 10 befindliches Gebläse, das zur Unterscheidung von dem in Figur 2 gezeigten Gebläse als Prüfgebläse 62 bezeichnet wird. Bei dem Prüfgebläse 62 handelt es sich um ein übliches Gebläse, das im Betrieb einen Luftstrom erzeugt. Der Verlauf einer mittels des Prüfgebläses 62 bedarfsweise erzeugten Luftströmung 30 ist in der Darstellung in Figur 9 gezeigt. Das Prüfgebläse 62 dient zur automatischen Prüfung der von einem Teilsegment 54 der Filterwechselvorrichtung 10 aufgenommenen Filtermodule 12, nämlich derjenigen Filtermodule 12, die sich in dem Teilsegment 54 über dem Prüfgebläse 62 befinden, wobei sich das Prüfgebläse 62 im äußeren Bereich 22 befindet. Bei der Darstellung in Figur 9 sind zur Veranschaulichung der aufgrund eines Betriebs des Prüfgebläses 62 resultierenden Luftströmung 30 die in dem Teilsegment 54 befindlichen Filtermodule 12 nicht dargestellt. Beim Betrieb des Prüfgebläses 62 wird Umgebungsluft aus dem äußeren Bereich 22 durch die Filtermodule 12 gesaugt und als Maß für eine jeweilige Beladung der betreffenden Filtermodule 12 mit zum Beispiel abgeschiedenen Farbpartikeln wird zum Beispiel einen Druckunterschied zwischen dem äußeren Bereich 22 und dem von dem jeweiligen Teilsegment 54 eingeschlossenen Teil des Strömungskanals 36 ermittelt. Dafür weist die Filterwechselvorrichtung 10 zum Beispiel stromaufwärts des Prüfgebläses 62 einen ersten Drucksensor 64 und außerhalb der Filterwechselvorrichtung 10 im äußeren Bereich 22 einen zweiten Drucksensor 66 auf. Beim Betrieb der Filterwechselvorrichtung 10 wird zur automatischen Ermittlung einer Beladung (Füllgrad) von Filtermodulen 12 eines äußeren Teilsegments 54 das Prüfgebläse 62 aktiviert und durch Erfassung von mittels des ersten und des zweiten Drucksensors 64, 66 sensierter Messwerte eine Druckdifferenz über dem jeweiligen äußeren Teilsegment 54 und damit ein Maß für den Füllgrad von dessen Filtermodulen 12 ermittelt. Das jeweils ermittelte Maß wird einem Bediener der Filterwechselvorrichtung 10 zum Beispiel mittels einer Anzeigeeinheit 68 angezeigt. Bei einer Anzeigeeinheit 68 in Form eines Monitors kann dem Bediener dieses Maß zum Beispiel als Prozentangabe angezeigt werden. Bei einer einfacheren Anzeigeeinheit 68, zum Beispiel einer Anzeigeeinheit 68 in Form eines Leuchtmittels, zum Beispiel einer LED, wird die Anzeigeeinheit 68 zum Beispiel dann angezeigt, wenn das ermittelte Maß einen vorgegebenen oder vorgebbaren Schwellwert überschreitet, so dass für den Bediener erkennbar ist, dass ein Austausch der Filtermodule 12 des jeweiligen Teilsegments 54 erforderlich ist. Die Möglichkeit zum Prüfen einer jeweiligen Beladung der Filtermodule 12 oder der Filterelemente 12 der Filterwechselvorrichtung 10 mittels eines Prüfgebläses 62 gilt für die hier vorgeschlagene Filterwechselvorrichtung 10 allgemein und für alle hier beschriebenen Ausführungsformen.

Der erste von der Filterwechselvorrichtung 10 umfasste Drucksensor 64 ist auch ein Beispiel für eine Sensorik allgemeiner Art zur Erfassung von Messwerten, zum Beispiel Temperatur und/oder Luftfeuchtigkeit, innerhalb der Filterwechselvorrichtung 10. Des Weiteren kann die als Drucksensor 64 bezeichnete Einheit als Beispiel für eine Sonde 64 dienen, mittels derer Betriebs- und/oder Hilfsstoffe in das Innere der Filterwechselvorrichtung 10 und den dortigen Strömungskanal 36 eingebracht werden. Ein Beispiel für einen derartigen Betriebs- oder Hilfsstoff ist Aktivkohlestaub. Mittels des Einbringens eines derartigen Betriebs- oder Hilfsstoffs erfolgt eine Bindung von Lösungsmitteln im Innern der Filterwechselvorrichtung 10. Anstelle eines Sensors 64 oder einer Sonde 64 kann die Filterwechselvorrichtung 10 eine Mehrzahl von Sensoren/Sonden 64 aufweisen, zum Beispiel gleichmäßig entlang der Höhe der Filterwechselvorrichtung 10 verteilt. Eine oder mehrere Sonden 64 können auch als Mittel zum Einbringen eines Löschmittels in das Innere der Filterwechselvorrichtung 10 und/oder auf die Mantelfläche der Filterwechselvorrichtung 10 fungieren. In Kombination mit einer entsprechenden Sensorik (einzelne oder mehrere Temperatursensoren 64) kann die Aktivierung zumindest einer Sonde 64 zum Abgeben eines Löschmittels auch automatisch erfolgen.

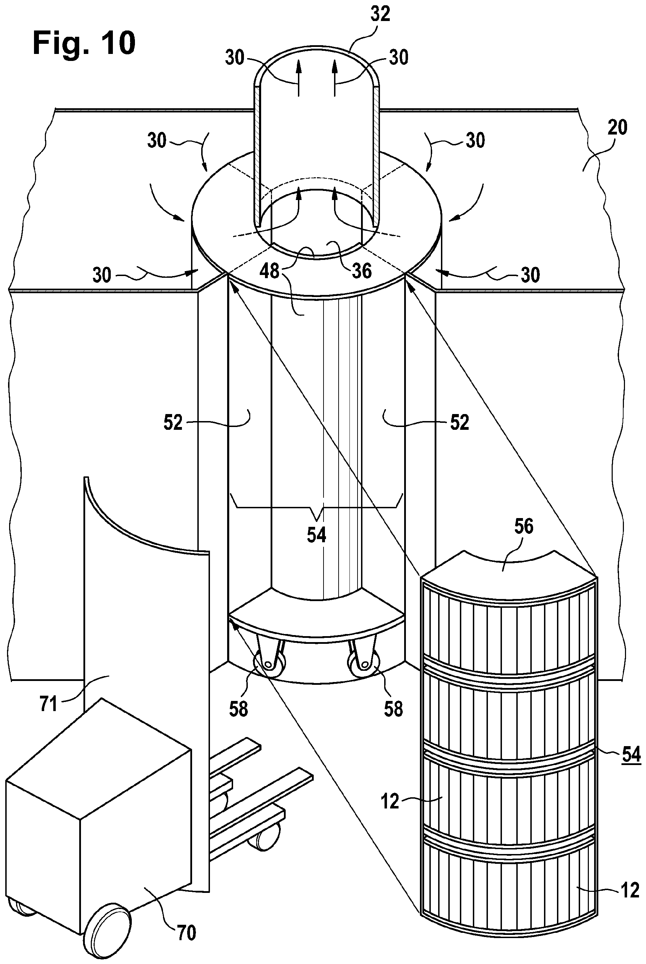

Die Darstellung in Figur 10 zeigt eine nochmals weitere Ausführungsform der Filterwechselvorrichtung 10. Bei dieser ist ein vollständiges Teilsegment 54 auf der Seite des äußeren Bereichs 22 aus der Filterwechselvorrichtung 10 entnehmbar und wird bei der Verwendung der Filterwechselvorrichtung 10 zum Auswechseln der Filtermodule 12 entnommen. Ein entnehmbares Teilsegment 54 umfasst einen Rahmen 40 (Teilsegmentrahmen 40) und das oder jedes im oder am Rahmen 40 platzierte Filtermodul 12. Als Rahmen 40 fungiert entweder ein Gehäuse 56 der in Figur 7 gezeigten Art. Das als Rahmen 40 fungierende Gehäuse 56 kann in seiner Höhe so bemessen sein, dass eine Aufnahme mehrerer Filtermodule 12 übereinander möglich ist. Zum Entnehmen eines vollständigen Teilsegment 54 ist das Gehäuse 56 in seiner Höhe und dem eingeschlossenen Mittelpunktswinkel so bemessen, dass das Gehäuse 56 alle Filtermodule 12 des Teilsegment 54 aufnimmt. Optional weist das Gehäuse 56 regelmäßig beabstandete Auflageflächen 50 auf, wie dies in der Darstellung in Figur 8, dort für den Rahmen 40 der Filterwechselvorrichtung 10, gezeigt ist. Zum Erhalt einer solchen Entnehmbarkeit sind das als Rahmen 40 fungierende Gehäuse 56 und die aufnehmende Filterwechselvorrichtung 10 entsprechend ausgebildet, zum Beispiel indem die Filterwechselvorrichtung 10 ein solches Gehäuse 56 an einer dafür vorgesehenen und zum Beispiel mittels Führungsschienen oder dergleichen begrenzten Position formschlüssig aufnimmt. Als Alternative zu einem derartigen Gehäuse 56 kommt auch in Betracht, dass die vollständige Entnehmbarkeit eines Teilsegments 54 gegeben ist, indem als Rahmen 40 des Teilsegment 54 zumindest eine äußere Seitenwand 52, insbesondere zwei äußere Seitenwände 52, sowie zumindest eine bodenseitige Auflagefläche 50 und gegebenenfalls weitere Auflageflächen 50 fungieren. Jeder derartige Rahmen 40 eines Teilsegments 54 und die aufnehmende Filterwechselvorrichtung 10 sind zum Erhalt einer solchen Entnehmbarkeit entsprechend ausgebildet, zum Beispiel indem die Rahmen 40 seitliche Führungs- oder Rastelemente aufweisen.

Die Entnahme jeweils zumindest eines Teilsegments 54 kann mittels eines dafür vorgesehenen Hilfsmittels, zum Beispiel eines Hilfsmittels in Form eines Hubwagens 70 oder dergleichen, erfolgen. Dies hat den Vorteil, dass die im beladenen Zustand gegebenenfalls sehr schweren Filtermodule 12 nicht von Hand bewegt werden müssen und dass ein mit dem Austausch der Filtermodule 12 betrauter Bediener nicht mit den von den Filtermodulen12 aufgenommenen Unreinheiten in Kontakt kommt. Die Möglichkeit, ein vollständiges Teilsegment 54 aus der Filterwechselvorrichtung 10 entnehmen zu können, erlaubt einen noch schnelleren Austausch von Filtermodulen 12 gegen frische Filtermodule 12. Zum Ersatz eines an der Filtervorrichtung 12 entnommenen Teilsegments 54 können nämlich im äußeren Bereich 22 Teilsegmente 54 mit frischen Filtermodulen 12 bereitgehalten werden, so dass ein entnommenes Teilsegment 54 unmittelbar durch ein Teilsegment 54 mit frischen Filtermodulen 12 ersetzt werden kann. Bei der Figur 10 gezeigten Situation ist zudem vorgesehen, dass an dem zum Austauschen von Teilsegmenten 54 vorgesehenen Hilfsmittel, hier also dem Hubwagen 70, ein Schutzschild 71 angebracht ist, welcher die zum äußeren Bereich 22 gewandte Oberfläche eines Teilsegments 54 formschlüssig oder im Wesentlichen formschlüssig abschließt, so dass die Gefahr, dass der Bediener mit von den Filterelementen 12 aufgenommenen Verunreinigungen in Kontakt kommt oder dass solche Verunreinigungen den äußeren Bereich 22 verschmutzen, weitestgehend ausgeschlossen, zumindest aber deutlich reduziert ist.

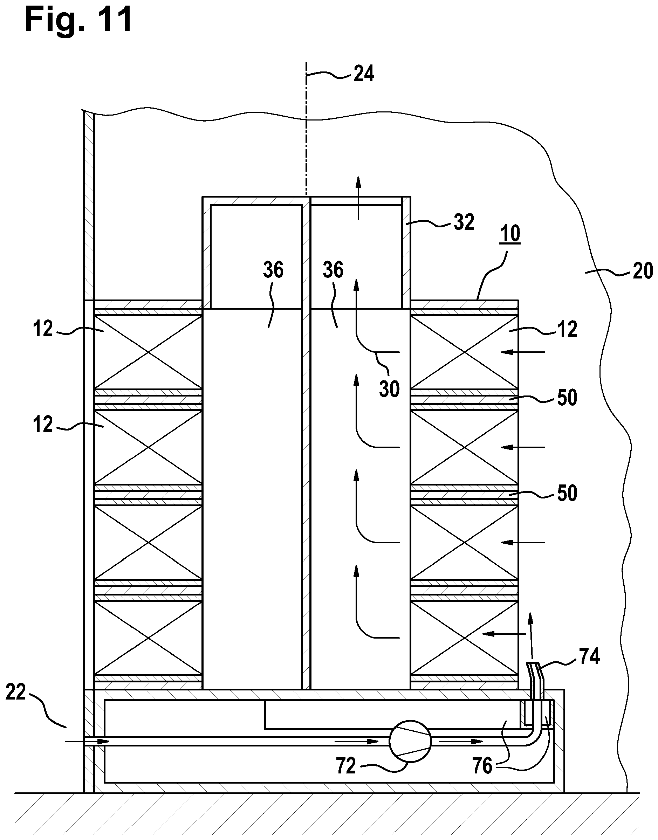

Die Darstellung in Figur 11 zeigt abschließend eine nochmals weitere Ausführungsform der Filterwechselvorrichtung 10. Auch diese gilt sowohl für die Filterwechselvorrichtung 10 allgemein wie auch für alle hier konkret beschriebenen Ausführungsformen. Die Darstellung zeigt die Filterwechselvorrichtung 10 in einem Längsschnitt, so dass ein zum Beispiel unterhalb der Filterwechselvorrichtung 10 platziertes und zur Unterscheidung von dem in Figur 2 gezeigten Gebläse 34 als Luftfördereinheit 72 bezeichnetes Gebläse erkennbar ist. Die Luftfördereinheit 72 ist auf einer Saugseite an den äußeren Bereich 22 angeschlossen, so dass mittels der Luftfördereinheit 72 nicht kontaminierte Umgebungsluft aus dem äußeren Bereich 22 angesaugt wird. Auf einer Druckseite der Luftfördereinheit 72 befinden sich am Boden der Filterwechselvorrichtung 10 und entlang von deren Umfangslinie im inneren Bereich 20 verteilte, insbesondere äquidistant beabstandete Düsen 74, wobei anstelle einer Vielzahl von Düsen 74 auch ein die Filterwechselvorrichtung 10 im inneren Bereich 20 konzentrisch umgebender Schlitz vorgesehen sein kann. Mittels der Luftfördereinheit 72 ist demnach Umgebungsluft aus dem äußeren Bereich 22 ansaugbar und im gegenüberliegenden inneren Bereich 20 umlaufend gegen einen Bodenbereich der Filterwechselvorrichtung 10 ausgebbar. Im Betrieb der Filterwechselvorrichtung 10 wird mittels der Luftfördereinheit 72 Umgebungsluft aus dem äußeren Bereich 22 angesaugt und im gegenüberliegenden inneren Bereich 20 umlaufend gegen einen Bodenbereich der Filterwechselvorrichtung 10 ausgegeben (ausgeblasen).

Bei der Darstellung in Figur 11 ist eine Ausführungsform mit einem im inneren Bereich 20 umlaufenden Luftkasten 76 gezeigt, von dem die Düsen 74 ausgehen. Alternativ kann der Luftkasten 76 auch den erwähnten Schlitz bilden. Die mittels der Luftfördereinheit 72 aus dem äußeren Bereich 22 angesaugte Luft gelangt jedenfalls durch die Düsen 74 oder dergleichen am Fuß der Filterwechselvorrichtung 10 an einen dortigen Abschnitt der Mantelfläche der Filterwechselvorrichtung 10. Die dort ausgeblasene Luft wirkt wie ein Luftvorhang. Der Luftvorhang bewirkt, dass sich im Bereich des Fußes der Filterwechselvorrichtung 10 keine Farbpartikel oder dergleichen absetzen. Damit ist in einem Übergang zwischen der im Betrieb segmentweise gedrehten Filterwechselvorrichtung 10 und einem von dieser Drehung selbstverständlich nicht erfassten Bodenabschnitt des inneren Bereichs 20 gewährleistet, dass sich dort ansonsten eventuell absetzende Farbpartikel die Drehbarkeit der Filterwechselvorrichtung 10 nicht behindern oder erschweren.

Einzelne im Vordergrund stehende Aspekte der hier eingereichten Beschreibung lassen sich damit kurz wie folgt zusammenfassen: Die hier vorgeschlagene Neuerung befasst sich mit einer Vorrichtung (Filterwechselvorrichtung) 10 zum Wechseln eines von der Vorrichtung 10 aufgenommenen Filter- und/oder Abscheideelements oder -moduls 12 sowie einem Verfahren zum Betrieb einer solchen Filterwechselvorrichtung 10 und schließlich auch einer Verwendung einer solchen Vorrichtung 10 für einen schnellen und effizienten Wechsel solcher Filter- und/oder Abscheideelemente oder -module 12. Der Schwerpunkt liegt demgemäß auf der Auswechselbarkeit solcher Elemente oder Module 12 im laufenden Betrieb. Dafür ist die Vorrichtung 10 drehbar. Mittels der Drehbarkeit lässt sich die im Bereich einer Grenzfläche zwischen einem inneren Bereich 20 und einem äußeren Bereich 22 in Form von an die Vorrichtung 10 angrenzenden Wandungen 14,16 platzierte Vorrichtung 10 im Betrieb so positionieren, dass zumindest ein Element oder Modul 12 dem inneren Bereich 20 zugewandt ist und dort zur Filtration und/oder Abscheidung wirksam ist. Zum Auswechseln eines solchen Elements oder Moduls 12 wird die Vorrichtung 10 gedreht, so dass das Element oder Modul 12 dem äußeren Bereich 22 zugewandt ist. Bei Ausführungsformen der Vorrichtung 10 ist eine Mantelfläche derselben so mit derartigen Elementen oder Modulen 12 belegt, dass beim Auswechseln eines dem äußeren Bereich 22 zugewandten Elements oder Moduls 12 gleichzeitig zumindest ein anderes Element oder Modul 12 dem inneren Bereich 20 zugewandt ist. Bei einer speziellen Ausführungsform einer solchen Variante der Vorrichtung ist die Mantelfläche derselben umlaufend mit derartigen Elementen oder Modulen 12 belegt.

**Bezugszeichenliste**

| | | | |
|---|---|---|---|
| 10 | Filterwechselvorrichtung; Vorrichtung zum Wechseln eines von der Vorrichtung aufgenommenen Filter- und/oder Abscheideelements | 40 | Rahmen |
| | | 42 | Dichtung |
| | | 44 | Rohr, Innenrohr |
| | | 46 | Rohr, Außenrohr |
| | | 48 | Schild |
| 12 | Filter- und/oder Abscheideelement; Filterelement | 49 | Durchbruch |
| | | 50 | Auflagefläche |
| 14, 16 | Wandung | 52 | Seitenwand |
| 18 | (frei) | 54 | Teilsegment |
| 20 | innerer Bereich; | 56 | Gehäuse |
| | kontaminierter Bereich | 58 | Laufrolle |
| 22 | äußerer Bereich; | 60 | Reibradantrieb |
| | Reinbereich | 62 | Prüfgebläse |
| 24 | Drehachse | 64 | (erster) Drucksensor / Sensor / Sonde |
| 26 | Doppelpfeil (zur Veranschaulichung der Drehbarkeit der Vor- richtung 10) | | |
| | | 66 | (zweiter) Drucksensor |
| | | 68 | Anzeigeeinheit |
| 28 | (frei) | 70 | Hubwagen |
| 30 | Luftströmung | 71 | Schutzschild |
| 32 | Kanalsystem | 72 | Luftfördereinheit (Gebläse) |
| 34 | Gebläse | 74 | Düse |
| 36 | Strömungskanal | 76 | Luftkasten |
| 38 | (frei) | | |

## Patentansprüche

1. Vorrichtung (10) zum Wechseln eines von der Vorrichtung (10) aufgenommenen Filter- und/oder Abscheideelements (12),
wobei die Vorrichtung (10) einen Bestandteil einer Wandung (14, 16) zwischen einem ersten, inneren Bereich (20) und einem zweiten, äußeren Bereich (22) bildet,
wobei die Vorrichtung (10) eine zylindrische oder im Wesentlichen zylindrische Hüllkontur aufweist sowie um eine Drehachse (24) drehbar ist und
wobei mittels einer Drehung der Vorrichtung (10) oder der Wandung (14, 16) um die Drehachse (24) ein mit seiner Außenfläche dem äußeren Bereich (22) zugewandtes Filter- und/oder Abscheideelement (12) in den inneren Bereich (20) drehbar ist und umgekehrt.

2. Vorrichtung (10) nach Anspruch 1, wobei eine Strömungsrichtung durch ein Filter- und/oder Abscheideelement (12), insbesondere eine Richtung einer Luftströmung (30), in etwa orthogonal zu einem Strömungskanal (36) im Innern der Vorrichtung (10) verläuft, wobei der Strömungskanal (36) parallel oder zumindest im Wesentlichen parallel zu einer Längsachse der Vorrichtung (10) verläuft.

3. Vorrichtung (10) nach Anspruch 1 oder 2, mit einem aus zwei oder mehr getrennt austauschbaren Segmenten gebildeten Filter- und/oder Abscheideelement (12).

4. Vorrichtung (10) nach Anspruch 1, 2 oder 3, wobei die Vorrichtung (10) einen Rahmen (40) zur Aufnahme zumindest eines Filter- und/oder Abscheideelements (12) aufweist und wobei der Rahmen (40) und das oder jedes darin oder daran platzierte Filter- und/oder Abscheideelement (12) mittels einer teilweisen Drehung der Vorrichtung (10) aus dem äußeren Bereich (22) in den inneren Bereich (20) drehbar ist und umgekehrt.

5. Vorrichtung (10) nach Anspruch 4, wobei mittels des Rahmens (40) mehrere um die Drehachse (24) der Vorrichtung (10) oder entlang der Drehachse (24) horizontal bzw. vertikal angeordnete Teilsegmente (54) gebildet werden.

6. Vorrichtung (10) nach Anspruch 5, wobei die Vorrichtung (10) bezüglich der Wandung (14, 16) derart platziert ist, dass nur komplette vertikale Teilsegmente (54) der Vorrichtung (10), insbesondere nur ein vertikales Teilsegment (54), in einem der Bereiche (20, 22) durchströmbar sind.

7. Vorrichtung (10) nach Anspruch 4, 5 oder 6, wobei ein Teilsegment (54) der Vorrichtung (10) derart ausgebildet ist, dass es die Bereiche (20, 22) gegeneinander verschließt.

8. Vorrichtung (10) nach einem der Ansprüche 4 bis 7, wobei der Rahmen (40) gemeinsam mit einem davon aufgenommenen Filter- und/oder Abscheideelements (12) aus der Vorrichtung (10) entnehmbar ist.

9. Vorrichtung (10) nach einem der Ansprüche 4 bis 8, wobei zwei oder mehr Rahmen (40) gemeinsam einen Strömungskanal (36) bilden.

10. Vorrichtung (10) nach Anspruch 9,
wobei jeder Rahmen (40) zumindest eine radial zur Drehachse (24) der Vorrichtung (10) orientierte und bis zur Drehachse (24) reichende Seitenwand (52) aufweist und
wobei die Seitenwand (52) jedes Rahmens (40) entlang der Drehachse (24) mit einer Seitenwand (52) eines benachbarten Rahmens (40) einen Querschnitt des Strömungskanals (36) entsprechend einer Anzahl verwendeter Rahmen (40) in gleich große Segmente unterteilt.

11. Vorrichtung (10) nach einem der Ansprüche 4 bis 10, wobei der Rahmen (40) zur Aufnahme quaderförmiger Filter- und/oder Abscheideelemente (12) ausgebildet ist.

12. Vorrichtung (10) nach einem der Ansprüche 4 bis 11, wobei der Rahmen (40) um die Drehachse der Vorrichtung (10) und um den Strömungskanal (36) drehbar ist.

13. Vorrichtung (10) nach einem der vorangehenden Ansprüche, wobei eine Wandung (44) des Strömungskanals (36) im Innern der Vorrichtung (10) derart mit Durchbrüchen (49) versehen ist, dass die Wandung (44) nur eine Luftströmung (30) von einem der beiden Bereiche (20, 22) zulässt.

14. Vorrichtung (10) nach einem der vorangehenden Ansprüche, wobei ein Strömungskanal (36) im Innern der Vorrichtung (10) derart ausgebildet ist, dass dieser eine Luftströmung (30) aus einem der Bereiche (20, 22) an ein weiterführendes Kanalsystem (32) verhindert.

15. Vorrichtung (10) nach einem der vorangehenden Ansprüche, wobei die Vorrichtung (10) zum Erhalt einer Drehbewegung mittels eines mechanischen Antriebs (60) antreibbar ist.

16. Vorrichtung (10) nach einem der vorangehenden Ansprüche, wobei sich im Strömungskanal (36) Sonden (64) für eine Einbringung von Betriebs- und Hilfsstoffen und/oder für eine Erfassung von Messwerten befinden.

17. Vorrichtung (10) nach einem der vorangehenden Ansprüche, wobei mittels einer Luftfördereinheit (72) Umgebungsluft aus einem der Bereiche (20, 22) ansaugbar und im gegenüberliegenden Bereich (20, 22) umlaufend gegen einen Bodenbereich der Vorrichtung (10) ausgebbar ist.

18. Verfahren zum Betrieb einer Vorrichtung (10) nach einem der vorangehenden Ansprüche 1 bis 17, wobei die Vorrichtung (10) zum Austausch zumindest eines mit seiner Außenfläche dem äußeren Bereich (22) zugewandten Filter- und/oder Abscheideelements (12) gedreht wird, bis das auszutauschende Filter- und/oder Abscheideelement (12) mit seiner Außenfläche dem inneren Bereich (20) zugewandt ist und wobei das auszutauschende Filter- und/oder Abscheideelement (12) in dieser Orientierung der Vorrichtung (10) entnommen wird.

19. Verwendung einer Vorrichtung (10) nach einem der vorangehenden Ansprüche 1 bis 17 zum Austausch zumindest eines von der Vorrichtung (10) aufgenommenen und mit seiner Außenfläche dem äußeren Bereich (22) zugewandten Filter- und/oder Abscheideelements (12).

## Claims

1. Device (10) for changing a filtering and/or separating-off element (12) accommodated by the device (10),
wherein the device (10) forms a constituent part of a wall (14, 16) between a first, inner region (20) and a second, outer region (22),
wherein the device (10) has a cylindrical, or essentially cylindrical, enveloping contour and can be rotated about an axis of rotation (24), and
wherein, by means of the device (10) or of the wall (14, 16) being rotated about the axis of rotation (24), a filtering and/or separating-off element (12), which has its outer surface directed towards the outer region (22), can be rotated into the inner region (20), and vice versa.

2. Device (10) according to Claim 1, wherein a direction of flow through a filtering and/or separating-off element (12), in particular a direction of an air flow (30), runs approximately orthogonally in relation to a flow channel (36) in the interior of the device (10), wherein the flow channel (36) runs parallel, or at least essentially parallel, to a longitudinal axis of the device (10).

3. Device (10) according to Claim 1 or 2, having a filtering and/or separating-off element (12) formed from two or more separately interchangeable segments.

4. Device (10) according to Claim 1, 2 or 3, wherein the device (10) has a frame (40) for accommodating at least one filtering and/or separating-off element (12), and wherein the frame (40) and the or each filtering and/or separating-off element (12) placed therein or thereon can be rotated, by means of partial rotation of the device (10), from the outer region (22) into the inner region (20), and vice versa.

5. Device (10) according to Claim 4, wherein the frame (40) forms a plurality of sub-segments (54) arranged horizontally about the axis of rotation (24) of the device (10) and/or vertically along the axis of rotation (24).

6. Device (10) according to Claim 5, wherein the device (10) is placed in relation to the wall (14, 16) such that flow can take place through only complete vertical sub-segments (54) of the device (10), in particular just one vertical sub-segment (54), in one of the regions (20, 22).

7. Device (10) according to Claim 4, 5 or 6, wherein a sub-segment (54) of the device (10) is designed such that it closes the regions (20, 22) in relation to one another.

8. Device (10) according to one of Claims 4 to 7, wherein the frame (40) can be removed from the device (10) together with a filtering and/or separating-off element (12) accommodated by it.

9. Device (10) according to one of Claims 4 to 8,
wherein two or more frames (40) together form a flow channel (36).

10. Device (10) according to Claim 9,
wherein each frame (40) has at least one side wall (52) which is oriented radially in relation to the axis of rotation (24) of the device (10) and extends to the axis of rotation (24), and
wherein the side wall (52) of each frame (40) along with a side wall (52) of an adjacent frame (40), along the axis of rotation (24), subdivides a cross section of the flow channel (36) into equal-sized segments corresponding to a number of frames (40) used.

11. Device (10) according to one of Claims 4 to 10, wherein the frame (40) is designed for accommodating cuboidal filtering and/or separating-off elements (12).

12. Device (10) according to one of Claims 4 to 11, wherein the frame (40) can be rotated about the axis of rotation of the device (10) and about the flow channel (36).

13. Device (10) according to one of the preceding claims, wherein a wall (44) of the flow channel (36) in the interior of the device (10) is provided with through-passages (49) such that the wall (44) permits only an air flow (30) from one of the two regions (20, 22).

14. Device (10) according to one of the preceding claims, wherein a flow channel (36) in the interior of the device (10) is designed such that it prevents an air flow (30) from one of the regions (20, 22) to an onward-directing channel system (32).

15. Device (10) according to one of the preceding claims, wherein the device (10), in order to obtain a rotary movement, can be driven by means of a mechanical drive (60).

16. Device (10) according to one of the preceding claims, wherein the flow channel (36) comprises probes (64) for an introduction of processing and/or auxiliary materials and/or for sensing measured values.

17. Device (10) according to one of the preceding claims, wherein, by means of an air-delivery unit (72), ambient air can be taken in from one of the regions (20, 22) and can be discharged in the opposite region (20, 22), with circulating action, towards a floor region of the device (10).

18. Method of operating a device (10) according to one of preceding Claims 1 to 17, wherein, for the purpose of changing over at least one filtering and/or separating-off element (12), which has its outer surface directed towards the outer region (22), the device (10) is rotated until the filtering and/or separating-off element (12) which is to be changed over has its outer surface directed towards the inner region (20), and wherein the filtering and/or separating-off element (12) which is to be changed over is removed from the device (10) in this orientation.

19. Use of a device (10) according to one of preceding Claims 1 to 17 for changing over at least one filtering and/or separating-off element (12) which is accommodated by the device (10) and has its outer surface directed towards the outer region (22).

## Revendications

1. Dispositif (10) pour le remplacement d'un élément de filtre et/ou de séparation (12) contenu dans le dispositif (10),
dans lequel le dispositif (10) forme un composant d'une paroi (14, 16) entre une première région intérieure (20) et une deuxième région extérieure (22),
dans lequel le dispositif (10) présente un contour enveloppant cylindrique ou essentiellement cylindrique et peut tourner autour d'un axe de rotation (24), et
dans lequel, au moyen d'une rotation du dispositif (10) ou de la paroi (14, 16) autour de l'axe de rotation (24), un élément de filtre et/ou de séparation (12) tourné avec sa face extérieure vers la région extérieure (22) peut tourner dans la région intérieure (20) et inversement.

2. Dispositif (10) selon la revendication 1, dans lequel une direction d'écoulement à travers l'élément de filtre et/ou de séparation (12), en particulier une direction d'un courant d'air (30), s'étend environ orthogonalement à un canal d'écoulement (36) à l'intérieur du dispositif (10), dans lequel le canal d'écoulement (36) s'étend parallèlement ou au moins essentiellement parallèlement à un axe longitudinal du dispositif (10).

3. Dispositif (10) selon la revendication 1 ou 2, avec un élément de filtre et/ou de séparation (12) formé de deux ou plus de deux segments échangeables séparément.

4. Dispositif (10) selon la revendication 1, 2 ou 3, dans lequel le dispositif (10) présente un cadre (40) destiné à recevoir au moins un élément de filtre et/ou de séparation (12) et dans lequel le cadre (40) et le ou chaque élément de filtre et/ou de séparation (12) placé dans ou sur celui-ci peut tourner de la région extérieure (22) à la région intérieure (20), ou inversement, au moyen d'une rotation partielle du dispositif (10).

5. Dispositif (10) selon la revendication 4, dans lequel plusieurs segments partiels (54) disposés horizontalement ou verticalement autour de l'axe de rotation (24) du dispositif (10) ou le long de l'axe de rotation (24) sont formés au moyen du cadre (40).

6. Dispositif (10) selon la revendication 5, dans lequel le dispositif (10) est placé par rapport à la paroi (14, 16) de telle manière que seuls des segments partiels verticaux complets (54) du dispositif (10), en particulier seul un segment partiel vertical (54), puisse(nt) être traversé(s) dans une des régions (20, 22).

7. Dispositif (10) selon la revendication 4, 5 ou 6, dans lequel un segment partiel (54) du dispositif (10) est configuré de telle manière qu'il ferme l'une par rapport à l'autre les régions (20, 22).

8. Dispositif (10) selon l'une quelconque des revendications 4 à 7, dans lequel le cadre (40) peut être enlevé hors du dispositif (10) de concert avec un élément de filtre et/ou de séparation (12) contenu dans celui-ci.

9. Dispositif (10) selon l'une quelconque des revendications 4 à 8, dans lequel deux ou plusieurs cadres (40) forment en commun un canal d'écoulement (36).

10. Dispositif selon la revendication 9,
dans lequel chaque cadre (40) présente au moins une paroi latérale (52) orientée radialement par rapport à l'axe de rotation (24) du dispositif (10) et s'étendant jusqu'à l'axe de rotation (24) et
dans lequel la paroi latérale (52) de chaque cadre (40) divise le long de l'axe de rotation (24) avec une paroi latérale (52) d'un cadre voisin (40) une section transversale du canal d'écoulement (36) en segments de même grandeur, conformément à un nombre de cadres utilisés (40).

11. Dispositif (10) selon l'une quelconque des revendications 4 à 10, dans lequel le cadre (40) est configuré en vue de accueillir des éléments de filtre et/ou de séparation parallélépipédiques (12).

12. Dispositif (10) selon l'une quelconque des revendications 4 à 11, dans lequel le cadre (40) peut tourner autour de l'axe de rotation du dispositif (10) et autour du canal d'écoulement (36).

13. Dispositif (10) selon l'une quelconque des revendications précédentes, dans lequel une paroi (44) du canal d'écoulement (36) est dotée, à l'intérieur du dispositif (10), d'orifices de passage (49) de telle manière que la paroi (44) ne permette un courant d'air (30) qu'à partir d'une des deux régions (20, 22).

14. Dispositif (10) selon l'une quelconque des revendications précédentes, dans lequel un canal d'écoulement (36) est formé à l'intérieur du dispositif (10) de telle manière que celui-ci empêche un courant d'air (30) depuis une des régions (20, 22) vers un système de canal de prolongement (32).

15. Dispositif (10) selon l'une quelconque des revendications précédentes, dans lequel le dispositif (10) peut être entraîné au moyen d'un entraînement mécanique (60) pour obtenir un mouvement de rotation.

16. Dispositif (10) selon l'une quelconque des revendications précédentes, dans lequel il se trouve dans le canal d'écoulement (36) des sondes (64) pour un ajout de substances de fonctionnement et d'addition matières consommables et/ou pour la détection de valeurs de mesure.

17. Dispositif (10) selon l'une quelconque des revendications précédentes, dans lequel de l'air ambiant peut être aspiré hors d'une des régions (20, 22) au moyen d'une unité de transport d'air (72) et peut être délivré dans la région opposée (20, 22) en circulant contre une région de fond du dispositif (10).

18. Procédé de conduite d'un dispositif (10) selon l'une quelconque des revendications 1 à 17, dans lequel on fait tourner le dispositif (10) pour le remplacement d'au moins un élément de filtre et/ou de séparation (12) tourné avec sa face extérieure vers la région extérieure (22), jusqu'à ce que l'élément de filtre et/ou de séparation à remplacer (12) soit tourné avec sa face extérieure vers la région intérieure (20) et dans lequel on enlève l'élément de filtre et/ou de séparation à remplacer (12) dans cette orientation du dispositif (10).

19. Utilisation d'un dispositif (10) selon l'une quelconque des revendications 1 à 17 pour le remplacement d'au moins un élément de filtre et/ou de séparation (12) contenu dans le dispositif (10) et tourné avec sa face extérieure vers la région extérieure (22).
